# EUROPEAN PATENT SPECIFICATION

(11) **EP 4 213 513 B1**
(45) Date of publication and mention of the grant of the patent: **29.10.2025**
(21) Application number: 21874331.8
(22) Date of filing: 23.09.2021
(51) Int. Cl.: H04W 4/80, H04W 8/00, H04W 48/10, H04W 48/16, H04W 76/14, H04W 4/02, H04W 12/50, H04W 12/68, H04W 84/12

(54) **METHOD FOR TOUCHING TO ESTABLISH WIRELESS CONNECTION BETWEEN DEVICES, ELECTRONIC DEVICE, AND CHIP**
BERÜHRUNGSVERFAHREN ZUR HERSTELLUNG EINER DRAHTLOSEN VERBINDUNG ZWISCHEN VORRICHTUNGEN, ELEKTRONISCHE VORRICHTUNG UND CHIP
PROCÉDÉ DE CONTACT POUR ÉTABLIR UNE CONNEXION SANS FIL ENTRE DES DISPOSITIFS, DISPOSITIF ÉLECTRONIQUE ET PUCE

(30) Priority: 30.09.2020 CN 202011070213
(43) Date of publication of application: 19.07.2023
(73) Proprietor: Huawei Technologies Co., Ltd., Shenzhen, Guangdong 518129 (CN)
(72) Inventor: SUN, Fanglin, Shenzhen, Guangdong 518129 (CN); WANG, Ping, Shenzhen, Guangdong 518129 (CN); WANG, Liping, Shenzhen, Guangdong 518129 (CN)
(74) Representative: Körber, Martin Hans
(86) International application number: PCT/CN2021/119929
(87) International publication number: WO 2022/068670

(56) References cited:
- EP-A1- 2 974 473
- EP-A1- 3 462 802
- WO-A1-2018/026138
- CN-A- 107 094 372
- CN-A- 110 072 269
- CN-A- 110 166 974
- CN-A- 110 166 974
- US-A1- 2020 162 883

## Description

### TECHNICAL FIELD

This application relates to the field of short-range communication technologies, and more specifically, to a method for establishing a wireless connection between devices through touching, an electronic device, a chip, and a computer-readable storage medium in the communication field.

### BACKGROUND

With development of the mobile Internet and intelligent electronic devices, service interaction between different intelligent electronic devices is increasingly popular. For example, service interaction such as file (for example, a picture, a video, audio, or a text) sharing, projection display, and wireless control may be implemented between intelligent electronic devices such as a mobile phone, a desktop computer, a tablet computer, a television, and a sound box. Before service data is transmitted between devices, a connection that supports transmission of the service data needs to be established between the devices, for example, a Bluetooth connection or a wireless local area network (wireless local area network, WLAN) connection.

At present, based on an NFC proximity sensing function, quick establishment of a connection between electronic devices may be triggered through NFC sensing. For example, NFC sensing areas of two electronic devices (briefly referred to as NFC devices) having an NFC function are closely attached to each other, so that Bluetooth pairing or a WLAN direct connection can be quickly established between the two NFC devices, without performing an operation, for example, manually searching for a device, performing pairing, and entering a password.

For example, Bluetooth pairing is performed between a mobile phone and a tablet computer. When an NFC function of the mobile phone is enabled, if an NFC sensing area (an NFC card reader is disposed in the area) of the mobile phone is closely attached to an NFC tag area of the tablet computer, the mobile phone displays a "Bluetooth pairing request" prompt box. If pairing is confirmed, Bluetooth pairing can be quickly established When the mobile phone is closely attached to the NFC tag area of the tablet computer, an NFC tag may obtain small power supply from the NFC card reader, so that a circuit of the NFC tag is driven by using the power supply, to transmit tag information of the NFC tag to the NFC card reader. Once the NFC card reader receives the tag information, quick establishment of a connection between the electronic devices may be triggered.

However, in the foregoing process of triggering a connection between electronic devices, a premise is that NFC apparatuses (for example, an NFC card reader and an NFC tag) are disposed in two electronic devices, and NFC sensing areas of the two electronic devices need to be closely attached to each other, to trigger establishment of a connection between devices. In other words, if any one of the two electronic devices does not have an NFC function (currently, no NFC apparatus is disposed in many electronic devices), or NFC sensing areas of the two electronic devices are not closely attached to each other, a connection between the electronic devices cannot be triggered by using the foregoing method, and consequently an objective of quickly starting service interaction between the electronic devices cannot be implemented.

CN 110 166 974 Al discloses related technology in which a wireless fidelity, WiFi, connection is established between two electronic devices.

### SUMMARY

This application provides a method for establishing a wireless connection between devices through touching, an electronic device, a chip, and a computer-readable storage medium, to resolve a problem in a related technology that establishment of a connection between electronic devices cannot be triggered due to a limitation of NFC hardware. The present invention is defined by an independent method claim 1 performed by a first electronic device, a corresponding independent device claim 6, a corresponding independent chip claim 11, and a corresponding independent storage medium claim 12. In the following description, embodiments which are not covered by the claims are to be considered as examples necessary for understanding the invention.

According to a first aspect, this application provides a method for establishing a wireless connection between devices through touching, where the method includes: A first electronic device performs wireless fidelity (wireless fidelity, Wi-Fi) scanning by using a first scanning duty cycle, where the Wi-Fi scanning is used to discover another electronic device around the first electronic device; when the first electronic device detects that the first electronic device is in a preset motion state, the first electronic device performs Wi-Fi scanning by using a second scanning duty cycle, where the second scanning duty cycle is greater than the first scanning duty cycle; and when signal quality of a first broadcast message obtained by the first electronic device through scanning meets a preset condition, the first electronic device establishes a Wi-Fi connection to a second electronic device, where the first broadcast message is a message sent by the second electronic device.

The scanning duty cycle is a time ratio of a scanning window in one cycle. If the scanning duty cycle is larger, a probability of obtaining a broadcast message through scanning is higher, and correspondingly, more power is consumed. If the scanning duty cycle is smaller, a probability of obtaining a broadcast message through scanning is lower, and correspondingly, less power is consumed. Because the second scanning duty cycle is greater than the first scanning duty cycle, scanning can be accelerated, so that the first electronic device quickly discovers another electronic device around the first electronic device.

In the foregoing solution, when the first electronic device detects that the first electronic device approaches or touches the second electronic device, the first electronic device may accelerate Wi-Fi scanning, so that the first electronic device quickly discovers the second electronic device. In this case, if the signal quality of the broadcast message that is of the second electronic device and that is obtained by the first electronic device through scanning meets the preset condition, quick establishment of a Wi-Fi connection between the two devices may be triggered, to implement an effect of a one-touch connection between devices. Because the scanning duty cycle of the first electronic device is increased, the first electronic device can accelerate scanning to obtain the first broadcast signal, so that the first electronic device can discover a to-be-connected device more quickly. This helps improve a speed of establishing a connection and performing service interaction between devices. In addition, no NFC apparatus is required, so that a hardware requirement on the electronic device can be reduced.

Optionally, whether the signal quality meets the preset condition may be determined by using at least one of the following parameters: received signal strength (received signal strength indication, RSSI), reference signal received power (reference signal received power, RSRP), and a signal-to-noise ratio (signal-to-noise ratio, SNR). For example, the RSSI is used as an example. When an RSSI value of the first broadcast message received by the first electronic device is greater than a preset threshold, the first electronic device may determine that the signal quality meets the preset condition.

In a possible implementation of the first aspect, the preset motion state includes at least one of the following: the first electronic device moves towards the second electronic device, and the first electronic device touches the second electronic device. The first electronic device may detect motion state information or a motion parameter of the first electronic device by using a built-in sensor, and determine a device motion state based on the motion state information or the motion parameter.

For example, the sensor may be at least one of the following: an acceleration sensor, an optical proximity sensor, a Hall effect sensor, and a gyroscope sensor, and certainly, may be any other sensor that meets an actual use requirement.

In a possible implementation of the first aspect, after the signal quality of the first broadcast message received by the first electronic device meets the preset condition, the method further includes: The first electronic device displays a first prompt message, where the first prompt message is used to prompt whether to establish a Wi-Fi connection to the second electronic device. In this case, that the first electronic device establishes a Wi-Fi connection to a second electronic device includes: In response to a connection confirmation operation of a user on the first prompt message, the first electronic device establishes a Wi-Fi connection to the second electronic device. In this way, a one-touch connection between devices can be implemented based on an actual use requirement of the user, to improve user experience.

In a possible implementation of the first aspect, after the first electronic device establishes a Wi-Fi connection to the second electronic device, the method further includes: The first electronic device sends first service data related to a first service to the second electronic device; and/or the first electronic device receives the first service data sent by the second electronic device. In this way, after a one-touch connection between devices is implemented, service data is quickly exchanged between devices, to improve an interaction experience function between devices.

In a possible implementation of the first aspect, the method further includes: When the first electronic device detects that the first electronic device is in the preset motion state, the first electronic device sends a first indication message to the second electronic device, where the first indication message is used to indicate the second electronic device to start to broadcast the first broadcast message or increase a frequency of broadcasting the first broadcast message. Because a broadcast frequency of the second electronic device is increased, the second electronic device can be discovered more quickly. This helps improve a speed of establishing a connection and performing interaction between devices.

In a possible implementation of the first aspect, the first broadcast message includes a device identifier and Wi-Fi channel information of the second electronic device. That the first electronic device establishes a Wi-Fi connection to a second electronic device includes: The first electronic device establishes a Wi-Fi connection to the second electronic device based on the first broadcast message.

The Wi-Fi channel information may indicate a Wi-Fi channel supported by the second electronic device, and the first electronic device may send a connection request message to the second electronic device based on the device identifier of the second electronic device, so that the first electronic device establishes a Wi-Fi connection to the second electronic device based on the Wi-Fi channel information.

In a possible implementation of the first aspect, the first broadcast message further includes a device identifier of a third electronic device; and the method further includes: The first electronic device establishes a Wi-Fi connection to the third electronic device. In this way, in this embodiment of this application, an effect of a one-touch connection between two devices is implemented, and an effect of a one-touch connection between more devices can also be implemented.

According to a second aspect, this application provides an electronic device, where the electronic device includes units configured to perform the method in the first aspect.

According to a third aspect, this application provides an electronic device, where the electronic device is a first electronic device, and the electronic device includes a wireless short-range communication chip and a sensor, where
the wireless short-range communication chip is configured to perform scanning by using a first scanning duty cycle, where the scanning is used to discover another electronic device around the first electronic device;
the sensor is configured to detect a motion state of the first electronic device relative to the another electronic device;
the wireless short-range communication chip is further configured to: when the sensor detects that the first electronic device is in a preset motion state, perform scanning by using a second scanning duty cycle, where the second scanning duty cycle is greater than the first scanning duty cycle; and
the wireless short-range communication chip is configured to: when signal quality of a first broadcast message obtained by the first electronic device through scanning meets a preset condition, establish a wireless connection between the first electronic device and the second electronic device, where the first broadcast message is a message sent by the second electronic device.

In a possible implementation of the third aspect, the preset motion state includes at least one of the following: the first electronic device moves towards the second electronic device, and the first electronic device touches the second electronic device.

In some embodiments, the electronic device further includes a display, and the display is configured to: after the signal quality of the first broadcast message obtained by the wireless short-range communication chip through scanning meets the preset condition, display a first prompt message, where the first prompt message is used to prompt whether to establish a wireless connection to the second electronic device; and the wireless short-range communication chip is specifically configured to: in response to a connection confirmation operation of a user on the first prompt message, establish a wireless connection to the second electronic device.

In a possible implementation of the third aspect, the wireless short-range communication chip is further configured to: after the first electronic device establishes a wireless connection to the second electronic device, send first service data related to a first service to the second electronic device; and/or receive the first service data sent by the second electronic device.

In a possible implementation of the third aspect, the wireless short-range communication chip is further configured to: when the sensor detects that the first electronic device is in the preset motion state, send a first indication message to the second electronic device, where the first indication message is used to indicate the second electronic device to start to broadcast the first broadcast message or increase a frequency of broadcasting the first broadcast message.

In a possible implementation of the third aspect, the first broadcast message includes a device identifier and channel information of the second electronic device; and the wireless short-range communication chip is specifically configured to establish a wireless connection between the first electronic device and the second electronic device based on the first broadcast message.

In a possible implementation of the third aspect, the first broadcast message further includes a device identifier of a third electronic device; and the wireless short-range communication chip is further configured to establish a wireless connection between the first electronic device and the third electronic device.

In a possible implementation of the third aspect, the wireless short-range communication chip is a wireless fidelity Wi-Fi chip or a Bluetooth chip.

According to a fourth aspect, this application provides a method for establishing a wireless connection between devices through touching, where the method includes: A first electronic device detects first motion state information of the first electronic device by using a first sensor; the first electronic device detects a first distance value between the first electronic device and a second electronic device; and when the first motion state information meets preset motion state information and the first distance value falls within a preset distance range, the first electronic device establishes a wireless connection to a target electronic device, where the target electronic device is the second electronic device or a third electronic device indicated by the second electronic device by using a broadcast message.

In the foregoing solution, it is detected that the motion state information of the first electronic device meets the preset motion state information, and it is detected that the distance between the first electronic device and the second electronic device falls within the preset distance range in which a wireless connection can be established, so that the first electronic device can be triggered to quickly establish a wireless connection to the second electronic device or another electronic device associated with the second electronic device. In the foregoing method for establishing a wireless connection between devices through touching, because no NFC apparatus is required, that is, an NFC card reader and an NFC tag do not need to be closely attached to each other to trigger and start a connection and interaction between electronic devices, a solution for establishing a connection between electronic devices and performing interaction provided in this embodiment of this application can reduce a hardware requirement on the electronic device.

In a possible implementation of the fourth aspect, the first sensor is a sensor configured to detect movement and/or touching of the first electronic device, and the preset motion state information is used to indicate that the first electronic device moves towards the second electronic device and/or touches the second electronic device.

For example, the first sensor may be at least one of the following: an acceleration sensor, an optical proximity sensor, a Hall effect sensor, and a gyroscope sensor, and certainly, may be any other sensor that meets an actual use requirement. For example, the first sensor is an acceleration sensor, the first motion state information includes a plurality of speed values or acceleration values that change with time, and the preset motion state information indicates that a speed value or an acceleration value changes and a change amount is greater than a preset threshold.

In a possible implementation of the fourth aspect, after the first electronic device detects the first motion state information of the first electronic device by using the first sensor, the method further includes: If the first motion state information meets the preset motion state information, the first electronic device performs a first action, where the first action includes any one of the following: enabling a scanning function of the first electronic device, and when the scanning function of the first electronic device is enabled, increasing a scanning duty cycle.

Because the scanning duty cycle of the first electronic device is increased, the first electronic device can accelerate scanning to obtain a first broadcast signal, so that the first electronic device can discover a to-be-connected device more quickly. This indirectly helps improve a speed of establishing a connection and performing interaction between devices.

In a possible implementation of the fourth aspect, after the first electronic device detects the first motion state information of the first electronic device by using the first sensor, the method further includes: If the first motion state information meets the preset motion state information, the first electronic device sends a first indication message to the second electronic device, where the first indication message is used to indicate to perform a second action, and the second action includes any one of the following: starting to broadcast a first broadcast message, and when a broadcast function of the second electronic device is enabled, increasing a frequency of broadcasting the first broadcast message.

In a possible implementation of the fourth aspect, that the first electronic device detects a first distance value between the first electronic device and a second electronic device includes: When the first electronic device obtains, through scanning, the first broadcast message broadcast by the second electronic device, the first electronic device calculates the first distance value based on the first broadcast message.

In a possible implementation of the fourth aspect, the first broadcast message includes a device identifier and first channel information of the target electronic device, and the first channel information is used to indicate a Wi-Fi channel or a Bluetooth (Bluetooth, BT) channel; and that the first electronic device establishes a wireless connection to a target electronic device includes: The first electronic device establishes a wireless connection to the target electronic device through Wi-Fi or Bluetooth based on the first broadcast message.

The device identifier of the target electronic device is an identifier used to uniquely represent the target electronic device, for example, a media access control (media access control, MAC) address. The first channel information indicates a channel used to establish a wireless connection. For example, a Wi-Fi channel is used as an example. The first channel information may indicate one of the first channel to the thirteenth channel.

In another possible implementation of the fourth aspect, the first broadcast message includes a device identifier of the target electronic device; and that the first electronic device establishes a wireless connection to a target electronic device includes: When obtaining the first broadcast message through scanning, the first electronic device sends a response message to the target electronic device based on the first broadcast message, where the response message includes a device identifier and second channel information of the first electronic device, and the second channel information is used to indicate a Wi-Fi channel or a Bluetooth channel; and the first electronic device establishes a wireless connection to the target electronic device through Wi-Fi or Bluetooth based on the first broadcast message and the response message.

The device identifier of the first electronic device is an identifier used to uniquely represent the first electronic device. The second channel information indicates a channel used to establish a wireless connection.

Optionally, the first broadcast message may further include a target password, and the target password is used to perform authentication when a wireless connection is established, to improve security of the wireless connection.

In a possible implementation of the fourth aspect, that the first electronic device establishes a wireless connection to a target electronic device includes: The first electronic device sends first service data related to a first service to the target electronic device; or the first electronic device receives the first service data sent by the target electronic device.

In a possible implementation of the fourth aspect, before the first electronic device establishes a wireless connection to the target electronic device, the method further includes: The first electronic device displays a first prompt message, where the first prompt message is used to prompt whether to establish a wireless connection to the target electronic device; and
that the first electronic device establishes a wireless connection to a target electronic device includes: When receiving a connection confirmation operation of a user on the first prompt message, the first electronic device establishes a wireless connection to the target electronic device.

According to a fifth aspect, this application provides a method for establishing a wireless connection between devices through touching, where the method includes: When first motion state information of a first electronic device meets preset motion state information and a first distance value falls within a preset distance range, a target electronic device establishes a wireless connection to the first electronic device, where the first distance value is used to indicate a distance between the first electronic device and a second electronic device, and the target electronic device is the second electronic device or a third electronic device indicated by the second electronic device by using a broadcast message.

In a possible implementation of the fifth aspect, the preset motion state information is used to indicate that the first electronic device moves towards the second electronic device and/or touches the second electronic device.

In a possible implementation of the fifth aspect, the method further includes: When the first motion state information meets the preset motion state information, the second electronic device receives a first indication message sent by the first electronic device, where the first indication message is used to indicate the second electronic device to perform a second action; and the second electronic device performs the second action, where the second action includes any one of the following: starting to broadcast a first broadcast message, and when a broadcast function of the second electronic device is enabled, increasing a frequency of broadcasting the first broadcast message.

In a possible implementation of the fifth aspect, the method further includes: The second electronic device detects the first motion state information; the second electronic device determines that the first motion state information meets the preset motion state information; and the second electronic device performs a third action, where the third action includes any one of the following: starting to broadcast a first broadcast message, and increasing a frequency of broadcasting the first broadcast message.

In a possible implementation of the fifth aspect, the first broadcast message includes a device identifier and first channel information of the target electronic device, and the first channel information is used to indicate a Wi-Fi channel or a Bluetooth channel; and that the target electronic device establishes a wireless connection to the first electronic device includes: The target electronic device establishes a wireless connection to the first electronic device through Wi-Fi or Bluetooth based on the first broadcast message.

In another possible implementation of the fifth aspect, the first broadcast message includes a device identifier of the target electronic device; and that the target electronic device establishes a wireless connection to the first electronic device includes: The target electronic device receives a response message sent by the first electronic device, where the response message includes a device identifier and second channel information of the first electronic device, and the second channel information is used to indicate a Wi-Fi channel or a Bluetooth channel; and the target electronic device establishes a wireless connection to the first electronic device through Wi-Fi or Bluetooth based on the first broadcast message and the response message.

In a possible implementation of the fifth aspect, after the target electronic device establishes a wireless connection to the first electronic device, the method further includes: The target electronic device receives first service data that is related to a first service and that is sent by the first electronic device; and/or the target electronic device sends the first service data to the first electronic device.

According to a sixth aspect, this application provides an apparatus for establishing a wireless connection, where the apparatus includes units configured to perform the method in the fourth aspect.

According to a seventh aspect, this application provides an apparatus for establishing a wireless connection, where the apparatus includes units configured to perform the method in the fifth aspect.

According to an eighth aspect, this application provides a wireless communication system, where the system includes a first electronic device and a second electronic device, and the system is configured to perform the method in the first aspect, the fourth aspect, and/or the fifth aspect.

According to a ninth aspect, this application provides an electronic device, where the electronic device includes a processor, the processor is coupled to a memory, the memory is configured to store a computer program or instructions, and the processor is configured to execute the computer program or the instructions stored in the memory, so that the method in the first aspect, the fourth aspect, and/or the fifth aspect is performed. For example, the processor is configured to execute the computer program or the instructions stored in the memory, so that the electronic device performs the method in the first aspect, the fourth aspect, and/or the fifth aspect.

According to a tenth aspect, this application provides a computer-readable storage medium, where the computer-readable storage medium stores a computer program (which may also be referred to as instructions or code) used to implement the method in the first aspect and/or the second aspect. For example, when the computer program is executed by a computer, the computer is enabled to perform the method in the first aspect, the fourth aspect, and/or the fifth aspect.

According to an eleventh aspect, this application provides a chip, including a processor. The processor is configured to read and execute a computer program stored in a memory, to perform the method in the first aspect, the fourth aspect, and/or the fifth aspect. Optionally, the chip further includes a memory, and the memory is connected to the processor by using a circuit or a wire. Optionally, the chip is a wireless short-range communication chip, for example, a Wi-Fi chip or a Bluetooth chip.

According to a twelfth aspect, this application provides a computer program product, where the computer program product includes a computer program (which may also be referred to as instructions or code), and when the computer program is executed by a computer, the computer is enabled to implement the method in the first aspect, the fourth aspect, and/or the fifth aspect.

### BRIEF DESCRIPTION OF DRAWINGS

FIG. 1 is a schematic diagram of a system architecture according to an embodiment of this application;
FIG. 2 is a schematic diagram of a structure of an electronic device according to an embodiment of this application;
FIG. 3 is a first schematic flowchart of a method for establishing a wireless connection between devices through touching according to an embodiment of this application;
FIG. 4 is a schematic diagram of applying an acceleration sensor to an electronic device according to an embodiment of this application;
FIG. 5 is a schematic diagram of a resultant acceleration waveform detected by an acceleration sensor according to an embodiment of this application;
FIG. 6 is a second schematic flowchart of a method for establishing a wireless connection between devices through touching according to an embodiment of this application;
FIG. 7 is a schematic diagram of a Bluetooth scanning window and a Bluetooth scanning interval;
FIG. 8 is a schematic diagram of comparison between a normal scanning mode, a power saving scanning mode, and an accelerated scanning mode;
FIG. 9 is a third schematic flowchart of a method for establishing a wireless connection between devices through touching according to an embodiment of this application;
FIG. 10 is a fourth schematic flowchart of a method for establishing a wireless connection between devices through touching according to an embodiment of this application;
FIG. 11 to FIG. 13 are schematic diagrams of an interface and a scenario to which a method for establishing a wireless connection between devices through touching is applied according to an embodiment of this application;
FIG. 14A and FIG. 14B are a fifth schematic flowchart of another method for establishing a wireless connection between devices through touching according to an embodiment of this application;
FIG. 15 to FIG. 18 are schematic diagrams of an interface and a scenario to which another method for establishing a wireless connection between devices through touching is applied according to an embodiment of this application;
FIG. 19 is a sixth schematic flowchart of another method for establishing a wireless connection between devices through touching according to an embodiment of this application;
FIG. 20 and FIG. 21 are schematic block diagrams of an apparatus for establishing a wireless connection according to an embodiment of this application;
FIG. 22 is a schematic diagram of a system for establishing a wireless connection according to an embodiment of this application; and
FIG. 23 is a schematic diagram of a structure of an electronic device according to an embodiment of this application.

### DESCRIPTION OF EMBODIMENTS

The following describes the technical solutions in embodiments of this application with reference to the accompanying drawings in embodiments of this application.

In descriptions of this application, unless otherwise specified, "/" means "or". For example, A/B may represent A or B. In this specification, "and/or" describes only an association relationship between associated objects, and represents that three relationships may exist. For example, A and/or B may represent the following three cases: Only A exists, both A and B exist, and only B exists. In addition, in descriptions of this application, unless otherwise specified, "a plurality of" means two or more than two. In addition, to clearly describe the technical solutions in embodiments of this application, the terms "first", "second", and the like in embodiments of this application are intended to distinguish between different objects, or are intended to distinguish between different processing of a same object, but are not intended to describe a particular order of the objects.

Reference to "an embodiment", "some embodiments", or the like described in this specification of this application means that one or more embodiments of this application include a specific feature, structure, or characteristic described with reference to these embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "contain", "have", and their variants all mean "include but are not limited to", unless otherwise specifically emphasized in another manner.

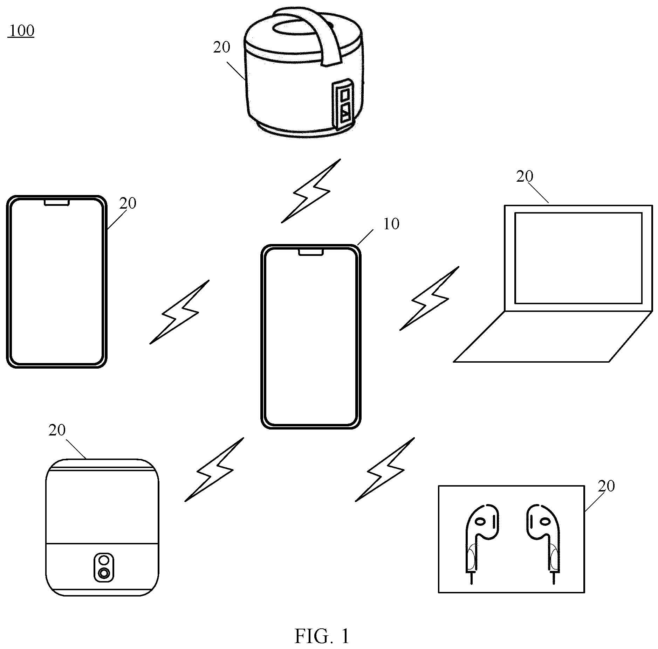

An embodiment of this application provides an electronic device 10. The electronic device 10 may be applied to a communication system 100 shown in FIG. 1. The communication system 100 may include an electronic device 10 and at least one electronic device 20.

The electronic device 10 may establish a wireless connection to the electronic device 20 by using a wireless communication technology. For example, the wireless communication technology may be Bluetooth (bluetooth, BT), or may be conventional Bluetooth or Bluetooth low energy BLE, a wireless local area network (wireless local area network, WLAN) (for example, a Wi-Fi network), Zigbee, frequency modulation (frequency modulation, FM), near field communication (near field communication, NFC), an infrared (infrared, IR) technology, a universal 2.4G/5G frequency band wireless communication technology, or the like. The wireless connection is a connection established by using the wireless communication technology. A type of the wireless communication technology is not specifically limited in this embodiment of this application.

The electronic device 10 may be a mobile terminal. For example, the electronic device 10 may be a mobile terminal such as a mobile phone (shown in FIG. 1), a tablet computer, a notebook computer, a palmtop computer, an in-vehicle terminal, a wearable device, an ultra-mobile personal computer (ultra-mobile personal computer, UMPC), a netbook, or a personal digital assistant (personal digital assistant, PDA). The electronic device 20 may be a mobile terminal, or may be a non-mobile terminal. For example, the electronic device 20 may be a mobile phone, a tablet computer, a notebook computer, a palmtop computer, a wearable device, a UMPC, a netbook or a PDA, a wireless headset, a wireless band, wireless smart glasses, a wireless watch, an augmented reality (augmented reality, AR)/virtual reality (virtual reality, VR) device, a desktop computer, an in-vehicle wireless device, a smart appliance (such as a television, a speaker, a refrigerator, an air purifier, an air conditioner, or an electric cooker), or the like. The electronic device 20 may also be collectively referred to as an internet of things (Internet of Things, IoT) device. Device types of the electronic device 10 and the electronic device 20 are not specifically limited in this embodiment of this application.

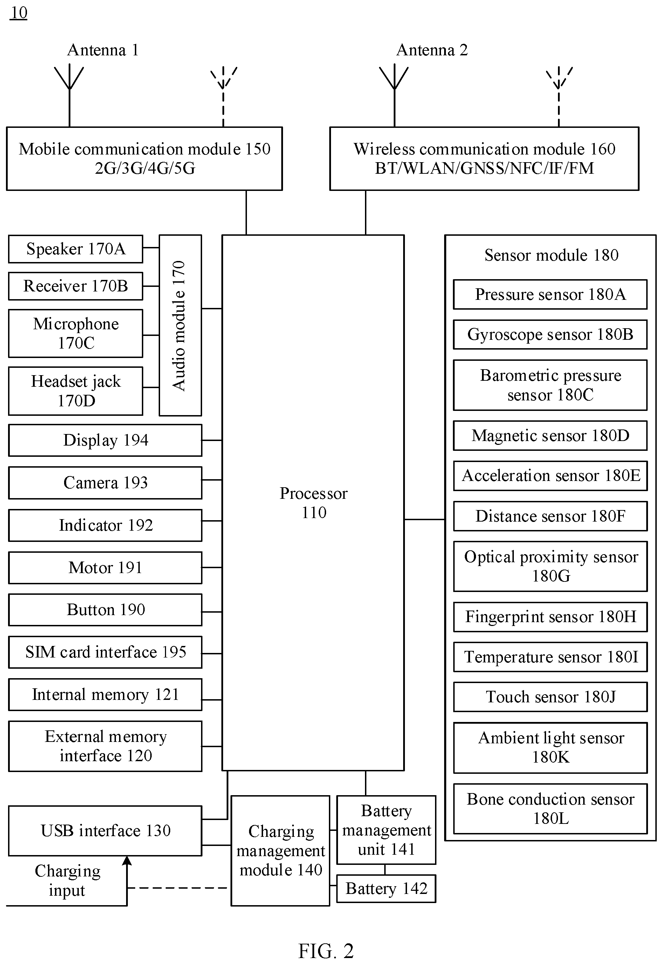

FIG. 2 is a schematic diagram of a structure of an electronic device 10. The electronic device 10 may include a processor 110, an external memory interface 120, an internal memory 121, a universal serial bus (universal serial bus, USB) interface 130, a charging management module 140, a power management unit 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180I, a touch sensor 180J, an ambient light sensor 180K, a bone conduction sensor 180L, and the like.

It may be understood that, the structure shown in this embodiment of this application constitutes no specific limitation on the electronic device 10. In some other embodiments of this application, the electronic device 10 may include more or fewer components than those shown in the figure, or combine some components, or split some components, or have different component arrangements. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be independent components, or may be integrated into one or more processors. The controller may be a nerve center and a command center of the electronic device 10. The controller may generate an operation control signal based on instruction operation code and a time sequence signal, to complete control of instruction fetching and instruction execution.

A memory may be further disposed in the processor 110, and is configured to store instructions and data. In some embodiments, the memory in the processor 110 is a cache memory. The memory may store instructions or data that are or is just used or cyclically used by the processor 110. If the processor 110 needs to use the instructions or the data again, the processor 110 may directly invoke the instructions or the data from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like. It may be understood that, an interface connection relationship between the modules shown in this embodiment of this application is merely an example for description, and does not constitute a limitation on the structure of the electronic device 10. In some other embodiments of this application, the electronic device 10 may alternatively use an interface connection manner different from that in the foregoing embodiment, or a combination of a plurality of interface connection manners.

The charging management module 140 is configured to receive a charging input from a charger. The charger may be a wireless charger or a wired charger. In some embodiments of wired charging, the charging management module 140 may receive a charging input of the wired charger through the USB interface 130. In some embodiments of wireless charging, the charging management module 140 may receive a wireless charging input through a wireless charging coil of the electronic device 10. When charging the battery 142, the charging management module 140 may further supply power to the electronic device by using the power management unit 141.

The power management unit 141 is configured to connect the battery 142 and the charging management module 140 to the processor 110. The power management unit 141 receives an input of the battery 142 and/or the charging management module 140, and supplies power to the processor 110, the internal memory 121, an external memory, the display 194, the camera 193, the wireless communication module 160, and the like. The power management unit 141 may further be configured to monitor parameters such as a battery capacity, a battery cycle count, and a battery state of health (current leakage or impedance). In some other embodiments, the power management unit 141 may be disposed in the processor 110. In some other embodiments, the power management unit 141 and the charging management module 140 may be disposed in a same component.

A wireless communication function of the electronic device 10 may be implemented by using the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 10 may be configured to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 150 may provide a solution to wireless communication such as 2G, 3G, 4G, and 5G applied to the electronic device 10. The mobile communication module 150 may include at least one filter, a switch, a power amplifier, a low noise amplifier (low noise amplifier, LNA), and the like. The mobile communication module 150 may receive an electromagnetic wave by using the antenna 1, perform processing such as filtering and amplification on the received electromagnetic wave, and transmit the electromagnetic wave to the modem processor for demodulation. The mobile communication module 150 may further amplify a signal modulated by the modem processor, and convert the signal into an electromagnetic wave for radiation by using the antenna 1. In some embodiments, at least some functional modules in the mobile communication module 150 may be disposed in the processor 110. In some embodiments, at least some functional modules in the mobile communication module 150 may be disposed in a same component as at least some modules in the processor 110.

The modem processor may include a modulator and a demodulator. The modulator is configured to modulate a to-be-sent low-frequency baseband signal into an intermediate/high-frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor, and then transmitted to the application processor. The application processor outputs a sound signal by using an audio device (which is not limited to the speaker 170A or the receiver 170B), or displays an image or a video by using the display 194. In some embodiments, the modem processor may be an independent component. In some other embodiments, the modem processor may be independent of the processor 110, and is disposed in a same component as the mobile communication module 150 or another functional module.

The wireless communication module 160 may provide a solution to wireless communication applied to the electronic device 10, for example, s WLAN (for example, Wi-Fi), BT, a global navigation satellite system (global navigation satellite system, GNSS), FM, NFC, IR, or a universal 2.4G/5G wireless communication technology. The wireless communication module 160 may be one or more components into which at least one communication processing module is integrated. The wireless communication module 160 receives an electromagnetic wave by using the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation by using the antenna 2.

In some embodiments, the wireless communication module 160 may be a Bluetooth chip. The electronic device 10 may be paired with a Bluetooth chip of an electronic device such as a wireless headset by using the Bluetooth chip, and establish a connection, to implement wireless communication and service processing between the electronic device 10 and another electronic device by using the connection. The Bluetooth chip may generally support BR/EDR Bluetooth and BLE.

In some embodiments, the antenna 1 and the mobile communication module 150 of the electronic device 10 are coupled, and the antenna 2 and the wireless communication module 160 are coupled, so that the electronic device 10 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (beidou navigation satellite system, BDS), a quasi-zenith satellite system (quasi-zenith satellite system, QZSS), and/or a satellite based augmentation system (satellite based augmentation system, SBAS).

The electronic device 10 implements a display function by using the GPU, the display 194, the application processor, and the like. The GPU is a microprocessor for image processing, and is connected to the display 194 and the application processor. The GPU is configured to perform mathematical and geometric calculation, and is configured to perform graphics rendering. The processor 110 may include one or more GPUs that execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a mini LED, a micro LED, a micro-OLED, a quantum dot light emitting diode (quantum dot light emitting diode, QLED), or the like. In some embodiments, the electronic device 10 may include one or N displays 194, and N is a positive integer greater than 1.

The electronic device 10 may implement a photographing function by using the ISP, the camera 193, the video codec, the GPU, the display 194, the application processor, and the like.

The ISP is configured to process data fed back by the camera 193. For example, during photographing, a shutter is pressed, light is transferred to a photosensitive element of the camera by using a lens, an optical signal is converted into an electrical signal, and the photosensitive element of the camera transmits the electrical signal to the ISP for processing, to convert the electrical signal into an image that can be seen. The ISP may further perform algorithm optimization on noise, brightness, and complexion of the image. The ISP may further optimize parameters such as exposure and a color temperature of a photographing scene. In some embodiments, the ISP may be disposed in the camera 193.

The camera 193 is configured to capture a still image or a video. An optical image of an object is generated by using the lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format such as RGB or YUV. In some embodiments, the electronic device 10 may include one or N cameras 193, and N is a positive integer greater than 1.

The digital signal processor is configured to process a digital signal, and may process another digital signal in addition to the digital image signal. For example, when the electronic device 10 selects a frequency, the digital signal processor is configured to perform Fourier transform and the like on frequency energy.

The video codec is configured to compress or decompress a digital video. The electronic device 10 may support one or more types of video codecs. In this way, the electronic device 10 may play or record videos in a plurality of encoding formats, for example, moving picture experts group (moving picture experts group, MPEG)-1, MPEG-2, MPEG-3, and MPEG-4.

The NPU is a neural-network (neural-network, NN) computing processor, and quickly processes input information by using a biological neural network structure, for example, by using a transfer mode between human brain neurons; and may further continuously perform self-learning. The NPU may be used to implement application such as intelligent cognition of the electronic device 10, for example, image recognition, facial recognition, voice recognition, and text understanding.

The external memory interface 120 may be configured to connect to an external storage card, for example, a micro SD card, to expand a storage capability of the electronic device 10. The external memory card communicates with the processor 110 through the external memory interface 120, to implement a data storage function, for example, to store a file such as music or a video into the external storage card.

The internal memory 121 may be configured to store computer-executable program code, and the executable program code includes instructions. The processor 110 runs the instructions stored in the internal memory 121 to perform various function applications and data processing of the electronic device 10. The internal memory 121 may include a program storage area and a data storage area. The program storage area may store an operating system, an application program required by at least one function (for example, a sound playing function or an image playing function), and the like. The data storage area may store data (such as audio data and a phone book) and the like that are created during use of the electronic device 10. In addition, the internal memory 121 may include a highspeed random access memory, and may further include a non-volatile memory such as at least one magnetic disk memory, a flash memory, or a universal flash storage (universal flash storage, UFS).

The processor 110 may be configured to execute the foregoing program code, and invoke related modules to implement functions of the electronic device in this embodiment of this application, for example, functions such as pairing with a wireless headset; when there is an audio service, sending connection request information to the wireless headset based on a priority of the audio service; and establishing/disconnecting a physical connection or a virtual connection between the electronic device and the wireless headset.

The electronic device 10 may implement an audio function by using the speaker 170A, the receiver 170B, the microphone 170C, the headset jack 170D, the application processor, and the like in the audio module 170, for example, music playing or recording.

The audio module 170 is configured to convert digital audio information into an analog audio signal output, and is also configured to convert an analog audio input into a digital audio signal. The audio module 170 may be further configured to encode and decode an audio signal. In some embodiments, the audio module 170 may be disposed in the processor 110, or some functional modules in the audio module 170 are disposed in the processor 110.

The speaker 170A, also referred to as a "loudspeaker", is configured to convert an audio electrical signal into a sound signal. The electronic device 10 may be used to listen to music or answer a hands-free call by using the speaker 170A.

The receiver 170B, also referred to as a "telephone receiver", is configured to convert an audio electrical signal into a sound signal. When the electronic device 10 is used to answer a call or receive voice information, the receiver 170B may be put close to the ear, to receive voice.

The microphone 170C, also referred to as "mic", is configured to convert a sound signal into an electrical signal. When making a call or sending voice information, a user may produce sound with the mouth approaching the microphone 170C, to input a sound signal to the microphone 170C. At least one microphone 170C may be disposed in the electronic device 10. In some other embodiments, two microphones 170C may be disposed in the electronic device 10, to implement a noise reduction function in addition to collecting a sound signal. In some other embodiments, three, four, or more microphones 170C may be disposed in the electronic device 10, to recognize a sound source, implement a directional recording function, and the like in addition to collecting a sound signal and implementing noise reduction.

The headset jack 170D is configured to connect to a wired headset. The headset jack 170D may be a USB interface 130, or may be a 3.5 mm open mobile terminal platform (open mobile terminal platform, OMTP) standard interface or a cellular telecommunications industry association of the USA (cellular telecommunications industry association of the USA, CTIA) standard interface.

The pressure sensor 180A is configured to sense a pressure signal, and may convert the pressure signal into an electrical signal. In some embodiments, the pressure sensor 180A may be disposed on the display 194. There are a plurality of types of pressure sensors 180A such as a resistive pressure sensor, an inductive pressure sensor, and a capacitive pressure sensor. The capacitive pressure sensor may include at least two parallel plates made of conductive materials. When force is applied to the pressure sensor 180A, capacitance between electrodes changes. The electronic device 10 determines pressure intensity based on a capacitance change. When a touch operation is performed on the display 194, the electronic device 10 detects intensity of the touch operation based on the pressure sensor 180A. The electronic device 10 may calculate a touch location based on a detection signal of the pressure sensor 180A. In some embodiments, touch operations that are performed at a same touch location but have different touch operation intensity may correspond to different operation instructions. For example, when a touch operation whose touch operation intensity is less than a first pressure threshold is performed on an SMS message application icon, an instruction for viewing an SMS message is executed. When a touch operation whose touch operation intensity is greater than or equal to a first pressure threshold is performed on an SMS message application icon, an instruction for creating a new SMS message is executed.

The gyroscope sensor 180B may be configured to determine a motion posture of the electronic device 10. In some embodiments, angular velocities of the electronic device 10 around three axes (namely, axes x, y, and z) may be determined by using the gyroscope sensor 180B. The gyroscope sensor 180B may be configured to implement image stabilization during photographing. For example, when a shutter is pressed, the gyroscope sensor 180B detects a jittering angle of the electronic device 10, calculates, based on the angle, a distance for which a lens module needs to compensate, and enables the lens to offset jittering of the electronic device 10 through reverse motion, to implement image stabilization. The gyroscope sensor 180B may also be used in a navigation scenario and a motion sensing game scenario.

The acceleration sensor 180E may detect acceleration values in various directions (generally, three axes) of the electronic device 10, and may detect magnitude and a direction of gravity when the electronic device 10 is still. The acceleration sensor 180E may be further configured to recognize a posture of the electronic device, and is used in an application such as switching between a landscape mode and a portrait mode and a pedometer.

The distance sensor 180F is configured to measure a distance. The electronic device 10 may measure the distance in an infrared or laser manner. In some embodiments, in a photographing scenario, the electronic device 10 may measure the distance by using the distance sensor 180F to implement quick focusing.

The optical proximity sensor 180G may include, for example, a light-emitting diode (light-emitting diode, LED) and an optical detector, for example, a photodiode. The light-emitting diode may be an infrared light-emitting diode. The electronic device 10 emits infrared light by using the light-emitting diode. The electronic device 10 detects infrared reflected light from a nearby object by using the photodiode. When detecting sufficient reflected light, the electronic device 10 may determine that there is an object near the electronic device 10. When detecting insufficient reflected light, the electronic device 10 may determine that there is no object near the electronic device 10. The electronic device 10 may detect, by using the optical proximity sensor 180G, that the user holds the electronic device 10 close to the ear for a call, to automatically turn off a screen for power saving. The optical proximity sensor 180G may also be used in a leather cover mode or a pocket mode to automatically perform screen unlocking or locking.

The ambient light sensor 180K is configured to sense brightness of ambient light. The electronic device 10 may adaptively adjust brightness of the display 194 based on the sensed brightness of the ambient light. The ambient light sensor 180K may also be configured to automatically adjust white balance during photographing. The ambient light sensor 180K may further cooperate with the optical proximity sensor 180G to detect whether the electronic device 10 is in a pocket, to prevent an accidental touch.

The barometric pressure sensor 180C is configured to measure barometric pressure. In some embodiments, the electronic device 10 calculates an altitude based on a barometric pressure value measured by the barometric pressure sensor 180C, to assist in positioning and navigation.

The magnetic sensor 180D includes a Hall effect sensor. The electronic device 10 may detect displacement of the electronic device 10 by using the magnetic sensor 180D. In some embodiments, the Hall effect sensor may form a linear trapezoidal magnetic field (or referred to as a slope magnetic field) by using a magnet. A displacement change of a Hall element in the linear magnetic field is consistent with a strength change of the magnetic field, and a formed Hall electric potential is directly proportional to the displacement. The electronic device 10 may measure a displacement value by obtaining the Hall electric potential.

The fingerprint sensor 180H is configured to collect a fingerprint. The electronic device 10 may implement fingerprint-based unlocking, application lock access, fingerprint-based photographing, fingerprint-based call answering, and the like by using a feature of the collected fingerprint.

The temperature sensor 180I is configured to detect a temperature. In some embodiments, the electronic device 10 executes a temperature processing policy based on the temperature detected by the temperature sensor 180I. For example, when the temperature reported by the temperature sensor 180I exceeds a threshold, the electronic device 10 reduces performance of a processor located near the temperature sensor 180I, to reduce power consumption to implement thermal protection. In some other embodiments, when the temperature is less than another threshold, the electronic device 10 heats the battery 142 to prevent the electronic device 10 from being shut down abnormally due to a low temperature. In some other embodiments, when the temperature is less than still another threshold, the electronic device 10 boosts an output voltage of the battery 142, to avoid abnormal shutdown due to a low temperature.

The touch sensor 180J is also referred to as a "touch panel". The touch sensor 180J may be disposed on the display 194, and the touch sensor 180J and the display 194 form a touchscreen that is also referred to as a "touchscreen". The touch sensor 180J is configured to detect a touch operation performed on or near the touch sensor 180J. The touch sensor may transfer the detected touch operation to the application processor to determine a type of a touch event, and may provide visual output related to the touch operation by using the display 194. In some other embodiments, the touch sensor 180J may be disposed on a surface of the electronic device 10, and is at a location different from a location of the display 194.

The bone conduction sensor 180L may obtain a vibration signal. In some embodiments, the bone conduction sensor 180L may obtain a vibration signal of a vibration bone of a human vocal-cord part. The bone conduction sensor 180L may also be in contact with a body pulse to receive a blood pressure beating signal. In some embodiments, the bone conduction sensor 180L may also be disposed in the headset, to obtain a bone conduction headset. The audio module 170 may obtain a voice signal through parsing based on the vibration signal that is of the vibration bone of the vocal-cord part and that is obtained by the bone conduction sensor 180L, to implement a voice function. The application processor may parse heart rate information based on the blood pressure beating signal obtained by the bone conduction sensor 180L, to implement a heart rate detection function.

The button 190 includes a power button, a volume button, and the like. The button 190 may be a mechanical button, or may be a touch button. The electronic device 10 may receive button input, and generate a button signal input related to a user setting and function control of the electronic device 10.

The motor 191 may generate a vibration prompt. The motor 191 may be configured to provide a vibration prompt for an incoming call, and may also be configured to provide a touch vibration feedback. For example, touch operations performed on different applications (for example, a photographing application and an audio playing application) may correspond to different vibration feedback effects. The motor 191 may also correspond to different vibration feedback effects for touch operations performed on different areas of the display 194. Different application scenarios (for example, a time reminder, information receiving, an alarm clock, and a game) may also correspond to different vibration feedback effects. A touch vibration feedback effect may be further customized.

The indicator 192 may be an indicator light, may be configured to indicate a charging state and a battery power change, and may be further configured to indicate a message, a missed call, a notification, and the like.

The SIM card interface 195 is configured to connect to a SIM card. The SIM card may be inserted into the SIM card interface 195 or removed from the SIM card interface 195, to be in contact with and separated from the electronic device 10. The electronic device 10 may support one or N SIM card interfaces, where N is a positive integer greater than 1. The SIM card interface 195 may support a nano SIM card, a micro SIM card, a SIM card, and the like. A plurality of cards may be inserted into a same SIM card interface 195. The plurality of cards may be of a same type or different types. The SIM card interface 195 may also be compatible with different types of SIM cards. The SIM card interface 195 may also be compatible with an external storage card. The electronic device 10 interacts with a network by using the SIM card, to implement functions such as calling and data communication. In some embodiments, the electronic device 10 uses an eSIM, namely, an embedded SIM card. The eSIM card may be embedded into the electronic device 10, and cannot be separated from the electronic device 10.

It may be understood that the components shown in FIG. 2 do not constitute a specific limitation on the electronic device 20. The electronic device 20 may include more or fewer components than those shown in the figure, or combine some components, or split some components, or have different component arrangements.

Based on the foregoing system architecture and hardware configuration, embodiments of this application provide a method for establishing a wireless connection between devices through touching. A first electronic device detects first motion state information of the first electronic device by using a first sensor; the first electronic device detects a first distance value between the first electronic device and a second electronic device; and when the first motion state information meets preset motion state information and the first distance value falls within a preset distance range, the first electronic device establishes a wireless connection to a target electronic device, where the target electronic device is the second electronic device or a third electronic device indicated by the second electronic device by using a broadcast message. In embodiments of this application, it is detected that the motion state information of the first electronic device meets the preset motion state information, and it is detected that the distance between the first electronic device and the second electronic device falls within the preset distance range in which a wireless connection can be established, so that the first electronic device can be triggered to quickly establish a wireless connection to the second electronic device or another electronic device associated with the second electronic device. In the foregoing method for establishing a wireless connection between devices through touching, because no NFC apparatus is required, that is, an NFC card reader and an NFC tag do not need to be closely attached to each other to trigger and start a connection and interaction between electronic devices, a solution for establishing a connection between electronic devices and performing interaction provided in embodiments of this application can reduce a hardware requirement on the electronic device.

It should be noted that the method for establishing a wireless connection between devices through touching provided in embodiments of this application may be performed by the foregoing electronic device (for example, the foregoing electronic device 10), or may be performed by a functional module and/or a functional entity that are/is in the electronic device and that can implement the method. This may be specifically determined based on an actual use requirement. This is not limited in embodiments of this application. The following describes, by using an example in which an execution body is an electronic device (for example, the first electronic device), the method for establishing a wireless connection between devices through touching provided in embodiments of this application.

In embodiments of this application, when no wireless connection is established between the first electronic device and the second electronic device, if a user needs to establish a wireless connection between the first electronic device and the second electronic device, or needs to implement service interaction between the first electronic device and the second electronic device (for example, projects a picture, displayed by the first electronic device, to the second electronic device for display), the user may perform an operation based on the method for establishing a wireless connection between devices through touching provided in embodiments of this application, to implement quick interconnection or service interaction between devices.

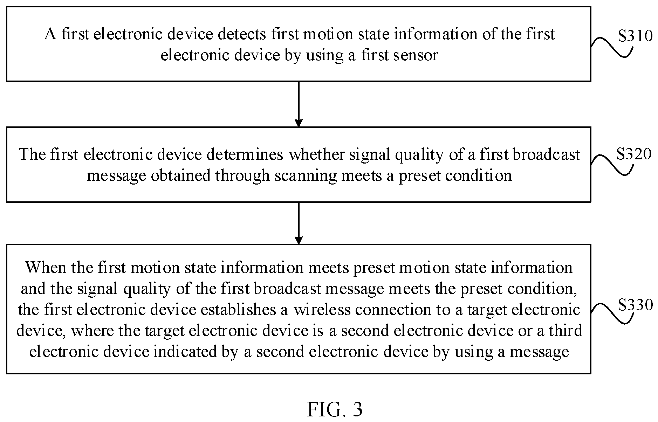

With reference to the accompanying drawings, the following describes, by using an example, the method for establishing a wireless connection between devices through touching provided in embodiments of this application. FIG. 3 is a flowchart of a method for establishing a wireless connection between devices through touching according to an example embodiment. Referring to FIG. 3, the method includes the following steps S310 to S330.

S310: A first electronic device detects first motion state information of the first electronic device by using a first sensor.

In this embodiment of this application, the first sensor may be a sensor that is disposed in the first electronic device and that is configured to sense a motion behavior of the first electronic device, for example, movement, rotation, and/or shake. Optionally, the first sensor may be an acceleration sensor, or may be an angular velocity sensor (for example, also referred to as a gyroscope sensor), or may be an optical proximity sensor, or may be a magnetic sensor (for example, a Hall effect sensor), or may be any other sensor that meets a use requirement, for example, a combined sensor. This may be specifically determined based on an actual use requirement. This is not limited in this embodiment of this application.

It may be understood that the first electronic device may detect the first motion state information in real time or periodically by using a built-in sensor, and may further determine the motion behavior (for example, a movement behavior, a rotation behavior, and/or a shake behavior) of the first electronic device based on the first motion state information.

For example, the first sensor is a three-axis acceleration sensor. In a movement process of the first electronic device, the acceleration sensor in the first electronic device may detect acceleration values (for example, x, y, and z) of the first electronic device in an X direction, a Y direction, and a Z direction, or may determine a resultant acceleration value (a²=x²+y²+z²) of the first electronic device in an X direction, a Y direction, and a Z direction based on acceleration values of the first electronic device in the X direction, the Y direction, and the Z direction. It should be noted that, in this embodiment of this application, the three-axis acceleration sensor imposes no limitation, and another acceleration sensor may be used. The acceleration value of the first electronic device in each direction or the resultant acceleration value thereof is used as the first motion state information, and may be used to determine the movement behavior or the shake behavior of the first electronic device.

For another example, the first sensor is a three-axis gyroscope sensor. In a movement process of the first electronic device, the gyroscope sensor in the first electronic device may detect angular velocity values (for example, α, β, and γ) of the first electronic device in an X direction, a Y direction, and a Z direction, or may determine a resultant angular velocity value (b²=α²+β²+γ²) of the first electronic device in an X direction, a Y direction, and a Z direction based on angular velocity values of the first electronic device in the X direction, the Y direction, and the Z direction. It should be noted that, in this embodiment of this application, the three-axis gyroscope sensor imposes no limitation, and a gyroscope sensor with another degree of freedom may be used. The angular velocity value of the first electronic device in each direction or the resultant angular velocity value thereof is used as the first motion state information, and may be used to determine the rotation behavior of the first electronic device.

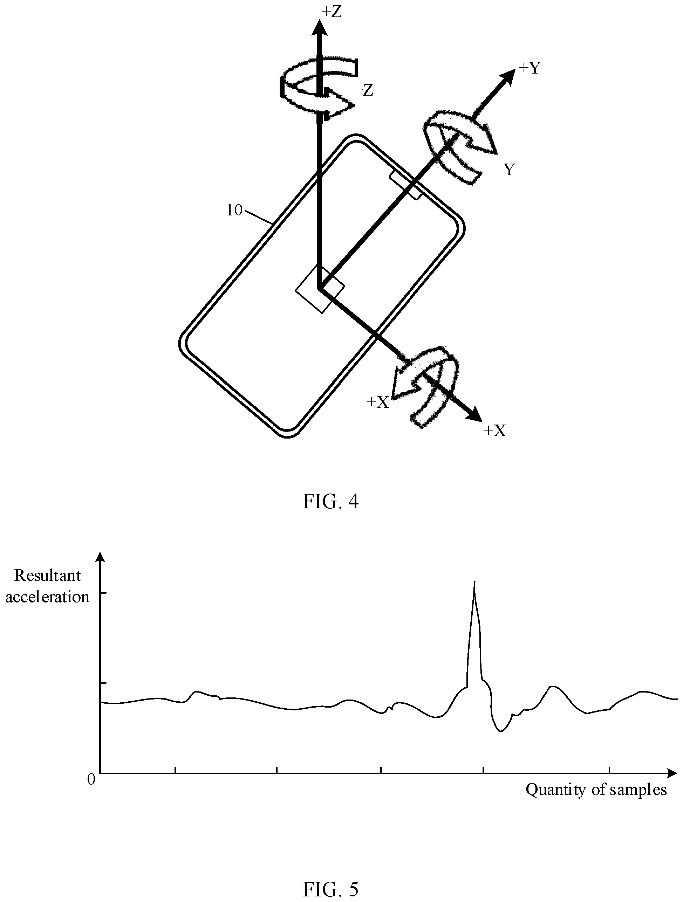

For another example, the first sensor is a six-axis sensor (including a three-axis acceleration sensor and a three-axis gyroscope sensor). As shown in FIG. 4, in a movement process of the first electronic device 10, the six-axis sensor in the first electronic device may detect acceleration values (for example, x, y, and z) and angular velocity values (for example, α, β, and γ) of the first electronic device 10 in a +X direction, a +Y direction, and a +Z direction, or may obtain a resultant acceleration value and a resultant angular velocity value of the first electronic device 10 in an X direction, a Y direction, and a Z direction. The angular velocity value of the first electronic device in each direction or the resultant angular velocity value thereof is used as the first motion state information, and may be used to determine the motion behavior (for example, a movement behavior, a rotation behavior, and/or a shake behavior) of the first electronic device.

In this embodiment of this application, the first motion state information may be represented by using a parameter that can represent movement, rotation, and/or shake of the electronic device. For example, the first motion state information may be represented by using a movement speed (for example, the foregoing acceleration value), may be represented by using a rotation posture (for example, the angular velocity value), may be represented by using a shake frequency, or may be represented by using any combination of parameters such as a movement speed, a rotation posture, and a shake frequency, or may be represented by using any other possible motion parameter (for example, a motion track). This may be specifically determined based on an actual use requirement. This is not limited in this embodiment of this application.

For example, if a user moves the first electronic device by a distance and then stops, the first sensor in the first electronic device may detect the movement behavior of the first electronic device, to obtain the first motion state information. For example, the first sensor may be an acceleration sensor, and the first motion state information may be represented by using an acceleration value. For example, the first motion state information may include a plurality of acceleration values that change with time.

For another example, when the first electronic device displays a Wi-Fi setting interface, if a user shakes the first electronic device, the first sensor in the first electronic device detects one or more parameters (namely, the first motion state information) corresponding to the shake behavior. If the one or more parameters fall within a preset threshold range (that is, the first motion state information meets preset motion state information), an event corresponding to the preset threshold range may be triggered, for example, a Wi-Fi scanning frequency is increased. For example, the first sensor may include an acceleration sensor and a gyroscope sensor, and the first motion state information may be represented by using an acceleration value and an angular velocity value. For example, the first motion state information may include a plurality of acceleration values and a plurality of angular velocity values that change with time.

It should be noted that an example in which the first electronic device obtains the first motion state information by using the first sensor is used above. It may be understood that in this embodiment of this application, the foregoing example manner is included but imposes no limitation, and the first motion state information is included but imposes no limitation. Specifically, the first sensor and the obtained first motion state information may be determined based on an actual use requirement. This is not limited in this embodiment of this application. For ease of description, an example in which the first electronic device is a mobile phone, the first sensor is an acceleration sensor, and the first motion state information is represented by using an acceleration value is used below for description.

For example, after the first electronic device is moved, the first electronic device "touches" (for example, approaches or touches) a second electronic device. It is assumed that the first electronic device is at a distance from the second electronic device. When the first electronic device approaches the second electronic device, the acceleration sensor detects that an acceleration value (and a speed value) of the first electronic device in each axis direction is close to 0 (but is not 0), to sense that the first electronic device moves. Then, after the first electronic device approaches the second electronic device, the first electronic device "touches" the second electronic device, and an acceleration value has a specific feature during "touching". For example, the acceleration sensor detects that the acceleration value in each axis direction has a pulse peak, or a resultant acceleration value in all axis directions has a pulse peak (as shown in a waveform graph in FIG. 5). In this case, the first electronic device may determine the "touching" action by identifying the pulse peak in the waveform graph.

Optionally, the first electronic device may compare the first motion state information with the preset motion state information, to determine whether the first motion state information meets the preset motion state information, that is, determine whether the motion behavior of the first electronic device is a preset motion behavior. The preset motion state information may be information indicating a preset motion behavior (for example, a movement behavior, a rotation behavior, and/or a shake behavior). For example, the preset motion state information is used to indicate that the first electronic device moves towards the second electronic device and then touches the second electronic device. This may be specifically set based on an actual requirement. This is not limited in this embodiment of this application.

For example, it is assumed that the first sensor is an acceleration sensor, the first motion state information includes a plurality of acceleration values that change with time, and the preset motion state information indicates that an acceleration value changes and a change amount is greater than a preset threshold. In this case, if the first electronic device detects that the plurality of acceleration values in the first motion state information change and a change amount is greater than the preset threshold, the first electronic device may determine that the first motion state information meets the preset motion state information, to determine a motion behavior in which the first electronic device moves first and then stops moving.

S320: The first electronic device determines whether signal quality of a first broadcast message obtained through scanning meets a preset condition.

The first broadcast message is a message broadcast by the second electronic device.

Optionally, whether the signal quality meets the preset condition may be determined by using at least one of the following parameters: an RSSI, an RSRP, and an SNR. For example, the RSSI is used as an example. When an RSSI value of the first broadcast message received by the first electronic device is greater than a preset threshold, the first electronic device may determine that the signal quality meets the preset condition.

In some embodiments, the first electronic device may detect strength of a signal sent by another electronic device around the first electronic device, and determine, based on the signal strength, whether the first electronic device and the second electronic device fall within a preset distance range. Optionally, it is assumed that there is a correspondence between signal strength and a distance range, and different signal strength corresponds to different distance ranges. In this case, the first electronic device may determine, based on the correspondence between signal strength and a distance range, whether the first electronic device and the second electronic device fall within the preset distance range. For example, it is assumed that minimum signal strength corresponding to the preset distance range is known to be S1. In this case, if detecting that signal strength S2 of the second electronic device is greater than or equal to the minimum signal strength S1, the first electronic device may determine that the quality of the signal sent by the second electronic device meets the preset condition, and therefore may determine that the first electronic device and the second electronic device fall within the preset distance range.

In some embodiments, the first electronic device may further detect a first distance value between the first electronic device and the second electronic device. In this embodiment of this application, the first electronic device may detect distance information between the first electronic device and each electronic device around the first electronic device in real time or periodically, for example, detect the first distance value between the first electronic device and the second electronic device, and may further determine, based on the first distance value, whether the first electronic device is very close to (for example, approaches or is in contact with) the second electronic device.

Optionally, the first electronic device may determine whether the first distance value falls within a preset distance range, to determine whether the first electronic device is very close to the second electronic device. Specifically, if the first distance value falls within the preset distance range, the first electronic device may determine that the first electronic device is very close to the second electronic device. If the first distance value does not fall within the preset distance range, the first electronic device may determine that the first electronic device is not close enough to the second electronic device.

The preset distance range may be determined based on an actual use requirement. For example, the preset distance range is [0 meters, 0.1 meter]. This is not limited in this embodiment of this application. For example, if the detected first distance value is 0.05 meter, that is, the first distance value falls within the preset distance range, the first electronic device may determine that the first electronic device is very close to the second electronic device. For another example, if the detected first distance value is 0, that is, the first distance value falls within the preset distance range, the first electronic device may determine that the first electronic device is in contact with the second electronic device.

It should be noted that, if the first distance value falls within the preset distance range, it may be determined that the first electronic device is very close to the second electronic device. In this case, short-distance wireless communication is usually applicable between the first electronic device and the second electronic device.

Optionally, in this embodiment of this application, the first electronic device may detect the first distance value in the following distance measurement manner.

Distance measurement manner 1: The first electronic device may calculate a distance between the two electronic devices by using energy (briefly referred to as received signal energy) of a received signal sent by the second electronic device and a first distance measurement formula, where the first distance measurement formula includes parameters such as a received signal energy value and a distance.

For example, the received signal energy is an RSSI. When obtaining an RSSI value, the first electronic device may substitute the RSSI value into the first distance measurement formula, to calculate the first distance value. For the first distance measurement calculation formula, refer to a calculation formula for performing distance measurement by using the RSSI value in a related technology. Details are not described herein again.

Distance measurement manner 2: The first electronic device may send an energy wave signal to the second electronic device, for example, an ultrasonic signal or an ultra-wideband (ultra wideband, UWB) signal, receive the returned energy wave signal, and then calculate a distance between the two electronic devices based on round-trip propagation time (also referred to as time of flight) of the energy wave signal.

For example, it is assumed that the first electronic device sends a UWB signal to the second electronic device at a first moment t1, and receives, at a second moment t1, the UWB signal returned from the second electronic device. In this case, the first electronic device may determine time of flight TOF information (t2-t1) of the UWB signal based on the first moment t1 and the second moment t1, and substitute the TOF information into a second distance measurement formula (for example, L=C*(t2-t1), where L represents a distance, and C represents the speed of light), to calculate the first distance value.

Certainly, in this embodiment of this application, the first distance value may be detected in another feasible manner. This may be specifically determined based on an actual use requirement. This is not limited in this embodiment of this application.

S330: When the first motion state information meets the preset motion state information and the signal quality of the first broadcast message meets the preset condition, the first electronic device establishes a connection to a target electronic device.

The target electronic device is the second electronic device or a third electronic device indicated by the second electronic device by using a broadcast message. Optionally, the preset motion state information is used to indicate that the first electronic device moves towards the second electronic device and/or touches the second electronic device.

In this embodiment of this application, as described above, if the first motion state information meets the preset motion state information, it may be determined that the motion behavior of the first electronic device meets the preset motion behavior; and if the first distance value falls within the preset distance range, it may be determined that the first electronic device is very close to the second electronic device. Therefore, when the first motion state information meets the preset motion state information and the first distance value falls within the preset distance range, it may be determined that the first electronic device moves by a short distance relative to the second electronic device. For example, the first electronic device moves towards the second electronic device and then approaches or is in contact with the second electronic device, or the first electronic device shakes and/or rotates within a short distance range of the second electronic device. When the first motion state information meets the preset motion state information and the first distance value falls within the preset distance range, it may be considered that the first electronic device and the second electronic device meet a condition of wireless communication (for example, short-distance wireless communication), and therefore establishment of a connection and service interaction between devices may be triggered.

It should be noted that, in a scenario in which a connection between devices is to be established, the first electronic device may be in a screen-on state. For example, the first electronic device may be in a screen-on state existing when a screen is locked, or may be in a screen-on state existing when a screen is unlocked. However, a case in which the first electronic device is in a screen-off state is not excluded in this embodiment of this application. The second electronic device may be in a turn-on state, and the second electronic device broadcasts the first broadcast message (that is, the target electronic device is in a discoverable and connectable state). The first broadcast message includes, for example, an identifier of the second electronic device, for example, a MAC address and a device name. If the first electronic device obtains the first broadcast message through scanning, the first electronic device establishes a wireless connection to the target electronic device after exchanging signaling and negotiating about information with the target electronic device through paging based on the first broadcast message.

Optionally, the first electronic device may establish a wireless connection to the second electronic device by using a wireless local area network, or may establish a wireless connection through Bluetooth, or may establish a wireless connection by using another possible technology or in another possible manner. This may be specifically determined based on an actual use requirement. This is not limited in this embodiment of this application.

The following describes, by using an example scenario, the method for establishing a wireless connection between devices through touching provided in this embodiment of this application. It is assumed that the first sensor is an acceleration sensor, the preset motion state information indicates that an acceleration value changes and a change amount is greater than the preset threshold, and the preset distance range is [0 meters, 0.1 meter]. In this case, if the user moves the first electronic device towards the second electronic device and stops moving after the first electronic device is in contact with the second electronic device, the acceleration sensor in the first electronic device may detect the movement behavior of the first electronic device, and obtain the first motion state information. The first motion state information includes a plurality of acceleration values that change with time. If the detected first motion state information meets the preset motion state information, and the detected first distance value (for example, 0) falls within the preset distance range, the first electronic device may determine that the first electronic device moves towards the second electronic device and then is in contact with the second electronic device, that is, a condition for establishing a wireless connection between electronic devices is met. In this case, the first electronic device may establish a wireless connection to the second electronic device. In this way, the user can trigger, only by enabling the first electronic device to approach or slightly touch the second electronic device, the first electronic device to establish a wireless connection to the second electronic device, to implement an effect of a one-touch connection between devices.

This embodiment of this application provides the method for establishing a wireless connection between devices through touching. The first electronic device detects the first motion state information of the first electronic device by using the first sensor; the first electronic device detects the first distance value between the first electronic device and the second electronic device; and when the first motion state information meets the preset motion state information and the first distance value falls within the preset distance range, the first electronic device establishes a wireless connection to the second electronic device. In this embodiment of this application, it is detected that the motion state information of the first electronic device meets the preset motion state information, and it is detected that the distance between the first electronic device and the second electronic device falls within the preset distance range in which a wireless connection can be established, so that the first electronic device can be triggered to quickly establish a wireless connection to the second electronic device or another electronic device associated with the second electronic device. In the foregoing method for establishing a wireless connection between devices through touching, because no NFC apparatus is required, that is, an NFC card reader and an NFC tag do not need to be closely attached to each other to trigger and start a connection between electronic devices, a solution for establishing a connection between electronic devices provided in this embodiment of this application can reduce a hardware requirement on the electronic device.

Optionally, in this embodiment of this application, before the first electronic device establishes a wireless connection to the target electronic device, the first electronic device may display a first prompt message, where the first prompt message is used to prompt whether to establish a wireless connection to the target electronic device. The user may perform an operation on the first prompt message to confirm the connection. Correspondingly, when receiving the connection confirmation operation of the user on the first prompt message, the first electronic device establishes a wireless connection to the target electronic device.

Optionally, in this embodiment of this application, that the first electronic device establishes a wireless connection to a target electronic device includes: The first electronic device may send first service data related to a first service to the target electronic device; or the first electronic device may receive the first service data sent by the target electronic device. The first service may be projection display, audio playing, or wireless file transmission. In this way, based on the method provided in this embodiment of this application, an interaction experience function between devices may be quickly triggered and enabled, for example, service interaction such as one-touch transmission and one-touch screen projection. This improves user experience.

It should be noted that a sequence of performing step 310 and step 320 may not be limited in this embodiment of this application. To be specific, in this embodiment of this application, step 310 may be performed before step 320, or step 320 may be performed before step 310, or step 310 and step 320 may be performed at the same time. It may be understood that, in FIG. 3, an example in which step 310 is performed before step 320 is used.

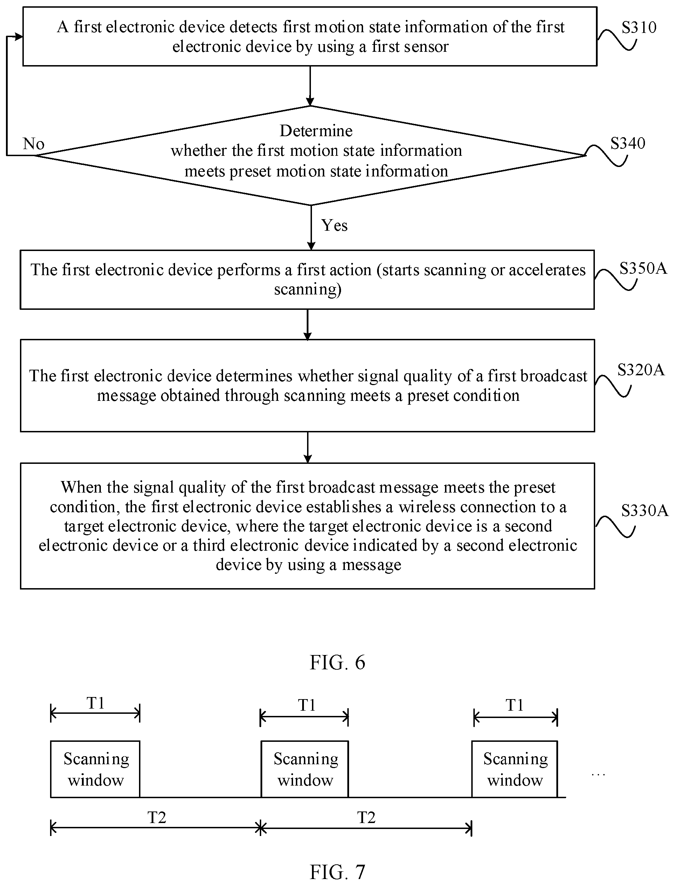

In a possible implementation, when determining that the first motion state information meets the preset motion state information, the first electronic device may trigger the first electronic device to start scanning or accelerate scanning to obtain a broadcast message of another device, and detect a distance between the first electronic device and the another electronic device based on the broadcast message obtained through scanning (that is, perform step 310 before step 320), to reduce energy consumption. For example, with reference to FIG. 3, as shown in FIG. 6, after the foregoing step S310 and before the foregoing step S320, the method for establishing a wireless connection between devices through touching provided in this embodiment of this application may further include the following step S340.

S340: The first electronic device determines whether the first motion state information meets the preset motion state information.

In this embodiment of this application, if the first electronic device determines that the first motion state information meets the preset motion state information, the first electronic device continues to perform the foregoing step 320; or if the first electronic device determines that the first motion state information does not meet the preset motion state information, the first electronic device continues to perform the foregoing step 310. In other words, only when the first motion state information meets the preset motion state information, the first electronic device further detects the first distance value, so that power consumption caused by detection of the first electronic device can be reduced.

As mentioned above, on a premise that the first electronic device obtains the first broadcast message through scanning, the first electronic device may further exchange signaling and negotiate about information with the target electronic device based on the first broadcast message, to establish a wireless connection to the target electronic device. In other words, when a connection needs to be established, scanning is accelerated to obtain the broadcast message, so that a speed of establishing a connection and performing service interaction between devices can be improved.

First, a scanning time parameter is described: a scanning window and a scanning interval. As shown in FIG. 7, a time width of one time of scanning is referred to as a scanning window, and is denoted as T1. A time difference between start time points of two consecutive scanning windows is referred to as a scanning interval, and is denoted as T2. If the scanning window is equal to the scanning interval, a scanning duty cycle is 1.

It should be noted that FIG. 7 shows a fixed scanning window and a fixed scanning interval. It may be understood that, in actual implementation, the scanning window may be fixed, or may be changed, for example, increases or decreases, and may be specifically set based on an actual situation; and the scanning interval may be fixed, or may be changed, for example, increases or decreases, and may be specifically set based on an actual situation. It should be further noted that, if the scanning window is larger, a probability of obtaining a broadcast message through scanning is higher, and correspondingly, more power is consumed. If the scanning window is smaller, a probability of obtaining a broadcast message through scanning is lower, and correspondingly, less power is consumed. In other words, if the scanning duty cycle (a time ratio of a scanning window in one cycle) is larger, a probability of obtaining a broadcast message through scanning is higher, and correspondingly, more power is consumed. If the scanning duty cycle is smaller, a probability of obtaining a broadcast message through scanning is lower, and correspondingly, less power is consumed.

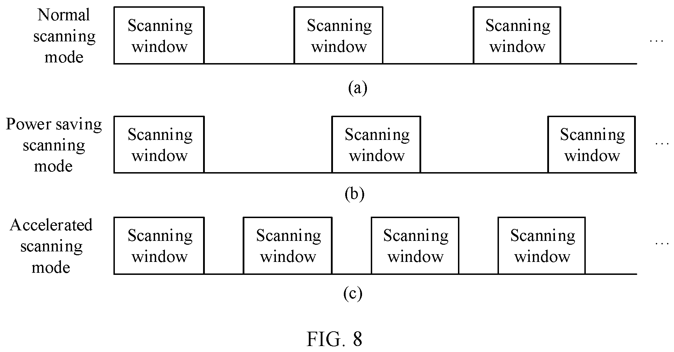

Generally, a scanning window and a scanning interval of Bluetooth scanning are fixed (referred to as a normal scanning mode, as shown in (a) in FIG. 8). Alternatively, a scanning window of Bluetooth scanning is fixed and a scanning interval gradually increases (referred to as a power saving scanning mode, as shown in (b) in FIG. 8), for example, the scanning window is 10 seconds, and the scanning intervals are sequentially 5 seconds, 10 seconds, and 20 seconds, to reduce unnecessary power consumption. Alternatively, a scanning interval of Bluetooth scanning is fixed, and a scanning window gradually decreases (another power saving scanning mode, for example, the scanning interval is 5 seconds, and the scanning windows are sequentially 10 seconds, 5 seconds, and 3 seconds until scanning is stopped, to reduce unnecessary power consumption). In this embodiment of this application, a probability that the first electronic device obtains a broadcast message through scanning when performing scanning in a normal scanning mode or a power saving scanning mode is low. Therefore, when the first electronic device needs to establish a connection to another electronic device, scanning (referred to as an accelerated scanning mode, as shown in (c) in FIG. 8) may be accelerated, to improve a speed of establishing a connection between devices.

It should be noted that for descriptions of Wi-Fi scanning, refer to the foregoing descriptions of Bluetooth scanning. Details are not described herein again.

In a possible embodiment, the first broadcast message includes a device identifier and first channel information of the target electronic device, and the first channel information is used to indicate a Wi-Fi channel or a Bluetooth channel. The first electronic device may establish a wireless connection to the target electronic device through Wi-Fi or Bluetooth based on the first broadcast message.

The device identifier of the target electronic device is an identifier used to uniquely represent the target electronic device, for example, a MAC address or a device name of the target electronic device. For example, the device identifier may be a MAC address used to indicate the second electronic device, or the device identifier may be a MAC address used to indicate the third electronic device.

The first channel information indicates a channel used to establish a wireless connection, and may be a Wi-Fi channel, or may be a Bluetooth channel. The Wi-Fi channel is used as an example. A channel on a Wi-Fi 2.4 GHz frequency band may be generally divided into 14 channels: the first channel to the fourteenth channel, where the fourteenth channel is generally not used. For example, the first channel information may be used to indicate one of the first channel to the thirteenth channel. Optionally, the first channel information may include an identifier (for example, a Wi-Fi identifier) of a wireless local area network, for example, a service set identifier (service set identifier, SSID) of a router. The first electronic device and the target electronic device may perform wireless local area network networking by using the identifier that is of the wireless local area network and that is carried in the first broadcast message. Alternatively, the first channel information may include a Bluetooth device identifier, and the first electronic device and the target electronic device may perform a Bluetooth connection by using the Bluetooth device identifier carried in the first broadcast message and/or pairing code.

In another possible embodiment, when the first broadcast message includes only a device identifier of the target electronic device, after obtaining the first broadcast message through scanning, the first electronic device may send a response message to the target electronic device. The response message may include at least one of the following: a device identifier and second channel information of the first electronic device, and the first channel information is used to indicate a Wi-Fi channel or a Bluetooth channel. The first electronic device and the target electronic device may establish a wireless connection through Wi-Fi or Bluetooth based on the first broadcast message and the response message.

For specific descriptions of the device identifier and the second channel information of the first electronic device, refer to the foregoing detailed descriptions of the device identifier and the first channel information of the target electronic device. Details are not described herein again.

Optionally, the first broadcast message may further include any other authentication information that is used for a wireless connection and that meets an actual use requirement. For example, the first broadcast message may further include a target password, and the target password is used to perform authentication when a wireless connection is established, to improve security of the wireless connection. For example, the target password may be a Wi-Fi password or Bluetooth pairing code. The target password may be a password set by a system by default, or may be set by the user based on a requirement. Similarly, the response message may also include any other authentication information (for example, a password) that is used for a wireless connection and that meets an actual use requirement.

The following describes in detail three implementations (the following Implementation 1, Implementation 2, and Implementation 3) of accelerating scanning that are provided in this embodiment of this application.

### Implementation 1

In Implementation 1, a scanning function of the first electronic device may be enabled through triggering or a scanning duty cycle of the first electronic device may be increased through triggering, so that the first electronic device accelerates scanning to obtain the first broadcast message, to accelerate scanning. As shown in FIG. 6, after the foregoing step S340, the method for establishing a wireless connection between devices through touching provided in this embodiment of this application further includes the following step S350A.

S350A: The first electronic device performs a first action.

The first action may include any one of the following:
Manner 1: The first electronic device enables a scanning function of the first electronic device. Specifically, if the scanning function of the first electronic device is not enabled, and the first electronic device detects that the first motion state information meets the preset motion state information, the first electronic device is triggered to automatically enable a Wi-Fi or Bluetooth function, to start Wi-Fi scanning or Bluetooth scanning. Optionally, after enabling the scanning function, the first electronic device may perform scanning based on a preset fixed scanning duty cycle, for example, perform scanning every 5 seconds. Alternatively, after enabling the scanning function, the first electronic device may perform scanning based on a preset variable scanning duty cycle, for example, gradually increase the scanning duty cycle, for example, perform scanning every 20 seconds, then perform scanning every 10 seconds, then perform scanning every 5 seconds, and so on. Because the scanning function of the first electronic device is enabled through triggering, the first electronic device can quickly obtain the first broadcast signal through scanning. This indirectly helps improve a speed of establishing a connection and performing service interaction between devices.
Manner 2: When a scanning function of the first electronic device is enabled, the first electronic device increases a scanning duty cycle. Specifically, when the scanning function of the first electronic device is enabled, if the first electronic device detects that the first motion state information meets the preset motion state information, the first electronic device is triggered to increase a current scanning duty cycle (corresponding to the accelerated scanning mode shown in (c) in FIG. 8).

In some embodiments, it is assumed that duration of the scanning window is unchanged, and duration of the scanning interval is decreased, to increase the scanning duty cycle. For example, the duration of the scanning window is fixed at 10 seconds (that is, duration of each time of scanning is 10 seconds), and the duration of the scanning interval is decreased from 5 seconds to 3 seconds.

In some embodiments, it is assumed that duration of the scanning interval is unchanged, and duration of the scanning window is increased, to increase the scanning duty cycle. For example, the duration of the scanning interval is fixed at 5 seconds, and the duration of the scanning window is increased from 5 seconds to 10 seconds.

In some embodiments, it is assumed that duration of the scanning window is increased, and duration of the scanning interval is decreased, to increase the scanning duty cycle. For example, the duration of the scanning window is increased from 5 seconds to 10 seconds (that is, duration of each time of scanning is 10 seconds), and the duration of the scanning interval is decreased from 5 seconds to 3 seconds.

Optionally, after the first electronic device starts scanning or increases the scanning duty cycle, if another device is not discovered through scanning after preset duration or after a preset quantity of times, the scanning duty cycle may be decreased or scanning may be stopped.

Because the scanning duty cycle of the first electronic device is increased, the first electronic device can accelerate scanning to obtain the first broadcast signal, so that the first electronic device can discover a to-be-connected device more quickly. This indirectly helps improve a speed of establishing a connection and performing service interaction between devices.

Further, after the foregoing step S350A, the foregoing step S320 may be specifically implemented by using the following step S320A.

S320A: The first electronic device determines whether the signal quality of the first broadcast message obtained through scanning meets the preset condition.

For example, when the first electronic device obtains, through scanning, the first broadcast message broadcast by the second electronic device, the first electronic device may determine, by using at least one of the following parameters, whether the signal quality of the first broadcast message meets the preset condition: an RSSI, an RSRP, and an SNR. For example, the RSSI is used as an example. When an RSSI value of the first broadcast message received by the first electronic device is greater than a preset threshold, that is, when signal strength is high, the first electronic device may determine that the signal quality of the first broadcast message meets the preset condition.

When the signal quality of the first broadcast message meets the preset condition, the first electronic device is close to the second electronic device, and a condition for establishing a wireless connection is met. Therefore, quick establishment of a wireless connection between devices may be triggered.

In this embodiment of this application, once detecting that the first motion state information meets the preset motion state information, the first electronic device may be triggered to enable the scanning function or increase the scanning duty cycle. In this way, a probability that the first electronic device obtains a broadcast signal of another electronic device through scanning can be increased. Specifically, in this embodiment, because the first electronic device enables the scanning function or increases the scanning duty cycle, the first electronic device can quickly obtain, through scanning, the first broadcast message broadcast by the second electronic device.

Further, when the first electronic device obtains, through scanning, the first broadcast message broadcast by the second electronic device, the first electronic device may determine whether the signal quality of the first broadcast message meets the preset condition: For example, the first electronic device may determine an RSSI value based on the first broadcast message. Further, when the RSSI value is greater than a preset threshold, the first electronic device may determine that the signal quality of the first broadcast message meets the preset condition.

Further, after the foregoing step S320A, the foregoing step S330 may be implemented by using the following step S330A.

S330A: When the signal quality of the first broadcast message meets the preset condition, the first electronic device establishes a wireless connection to the second electronic device.

In Implementation 1, the first electronic device may first detect the first motion state information and determine whether the first motion state information meets the preset motion state information, and when determining that the first motion state information meets the preset motion state information, trigger the first electronic device to start scanning or accelerate scanning to obtain a broadcast message of another device, so that the first electronic device can discover a to-be-connected device more quickly. When the first electronic device obtains the first broadcast message of the second electronic device through scanning, and the signal quality of the first broadcast message meets the preset condition, the first electronic device may establish a wireless connection to the target electronic device. Therefore, in the solution provided in this embodiment of this application, the to-be-connected device can be discovered more quickly, and a connection between devices can be quickly established.

### Implementation 2

The foregoing describes a possible implementation of accelerating scanning to obtain a broadcast message, that is, the scanning function of the first electronic device is enabled through triggering or the scanning duty cycle of the first electronic device is increased through triggering, so that the first electronic device accelerates scanning to obtain the first broadcast message, and the first electronic device can discover the to-be-connected device more quickly. In this embodiment of this application, the foregoing manner of accelerating scanning is included but imposes no limitation. For example, a message broadcast function of the second electronic device may be enabled through triggering or a message broadcast frequency of the second electronic device may be increased through triggering, so that the first broadcast message is obtained through scanning more quickly, to accelerate scanning. The following describes in detail Implementation 2.

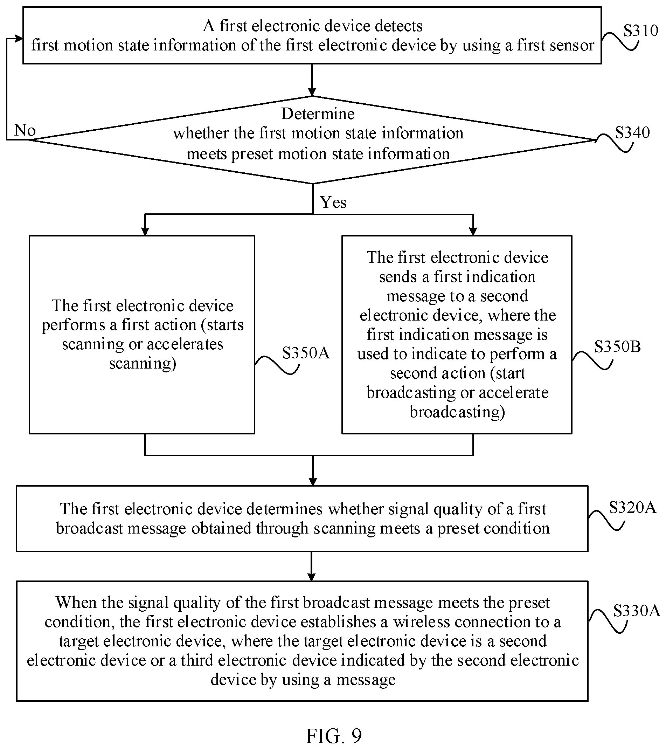

In Implementation 2, with reference to FIG. 6, as shown in FIG. 9, after foregoing step S340, if the first motion state information meets the preset motion state information, the method for establishing a wireless connection between devices through touching provided in this embodiment of this application may further include the following step S350B.

S350B: The first electronic device sends a first indication message to the second electronic device, where the first indication message is used to indicate to perform a second action.

The second action may include any one of the following:
Manner 1: The second electronic device enables a message broadcast function of the second electronic device. Specifically, when the message broadcast function of the second electronic device is not enabled, if the first electronic device detects that the first motion state information meets preset motion state information (for example, the first electronic device touches the second electronic device), the first electronic device is triggered to send the first indication message to the second electronic device, to indicate the second electronic device to enable the message broadcast function. It should be noted that, it is assumed herein that the first electronic device and the second electronic device have been paired or have a connection record. In this case, the first electronic device stores an identifier or an address of the second electronic device. Therefore, the first electronic device may send the first indication message to the second electronic device based on the identifier or the address.
   Optionally, after enabling the message broadcasting function, the second electronic device may perform broadcast by using a default message broadcast frequency, for example, perform broadcast every 10 seconds. Because the message broadcast function of the second electronic device is enabled through triggering, the first broadcast message can be quickly obtained through scanning, that is, the first electronic device can quickly obtain the first broadcast signal through scanning. This indirectly helps improve a speed of establishing a connection and performing service interaction between devices.
Manner 2: When a broadcast function of the second electronic device is enabled, the second electronic device increases a message broadcast frequency. Specifically, when the broadcast function of the second electronic device is enabled, if the first electronic device detects that the first motion state information meets the preset motion state information, the first electronic device is triggered to send the first indication message to the second electronic device, to indicate the second electronic device to increase a current message broadcast frequency, for example, increase the current message broadcast frequency (for example, perform broadcast every 10 seconds) to a target frequency (for example, perform broadcast every 5 seconds). Because the message broadcast frequency of the second electronic device is increased, the first broadcast message can be quickly obtained through scanning, that is, the first electronic device can quickly obtain the first broadcast signal through scanning. This indirectly helps improve a speed of establishing a connection and performing service interaction between devices.

Optionally, after the second electronic device starts to broadcast a message or increases the message broadcast frequency, if the second electronic device is not discovered, through scanning, after preset duration or after a preset quantity of times by another device (for example, the second electronic device does not receive a paging message sent by another electronic device), the second electronic device may reduce the message broadcast frequency or stop broadcasting a message.

In Implementation 2, the first electronic device may first detect the first motion state information and determine whether the first motion state information meets the preset motion state information, and when determining that the first motion state information meets the preset motion state information, trigger the first electronic device to send a message to the second electronic device, to indicate the second electronic device to start broadcasting or accelerate broadcasting. When the first electronic device obtains the first broadcast message of the second electronic device through scanning, and the signal quality of the first broadcast message meets the preset threshold, the first electronic device may establish a connection to and perform service interaction with the target electronic device. Therefore, in the solution provided in this embodiment of this application, the to-be-connected device can be discovered more quickly, a connection between devices can be quickly established, and service interaction can be quickly performed.

### Implementation 3

The following is described in the foregoing Implementation 2: The first electronic device notifies the second electronic device to start to broadcast the first broadcast message or increase the frequency of broadcasting the first broadcast message, so that the first broadcast message is obtained through scanning more quickly, to accelerate scanning. In addition, the second electronic device may actively detect whether the first motion state information meets the preset motion state information, and when the first motion state information meets the preset motion state information, start to broadcast the first broadcast message or increase the frequency of broadcasting the first broadcast message, so that the first broadcast message is obtained through scanning more quickly, to accelerate scanning. The following describes Implementation 3 in detail.

In Implementation 3, the method for establishing a wireless connection between devices through touching provided in this embodiment of this application may further include the following steps S350C and S350D.

S350C: The second electronic device detects the first motion state information.

S350D: If the second electronic device determines that the first motion state information meets the preset motion state information, the second electronic device performs a third action, where the third action includes any one of the following: starting to broadcast the first broadcast message, and increasing a frequency of broadcasting the first broadcast message.

In Implementation 3, the second electronic device may actively detect the first motion state information and determine whether the first motion state information meets the preset motion state information, and when determining that the first motion state information meets the preset motion state information, start broadcasting or accelerate broadcasting, so that the first electronic device quickly obtains the first broadcast message of the second electronic device through scanning. Therefore, the first electronic device can discover the to-be-connected device more quickly, and quickly establish a connection between devices.

It should be noted that, when the first motion state information meets the preset motion state information and the first distance value falls within the preset distance range, the first electronic device may further exchange signaling and negotiate about information with the target electronic device based on the first broadcast message obtained through scanning, to establish a connection to and perform service interaction with the target electronic device. Herein, the first electronic device may establish a connection to and perform service interaction with the target electronic device by using a wireless local area network, or may establish a wireless connection (briefly referred to as a Bluetooth connection below) to the target electronic device through Bluetooth, or may establish a wireless connection to the target electronic device in another manner. The following describes, by using an example and the following Embodiment 1 and Embodiment 2, a process in which the first electronic device establishes a wireless connection to the target electronic device.

### Embodiment 1

In Embodiment 1, the first electronic device obtains, through scanning, the first broadcast message broadcast by the second electronic device, where the first broadcast message may be used to request the first electronic device to establish a wireless communication connection to the target electronic device. For example, the first broadcast message is used to request the first electronic device to establish a wireless communication connection to the second electronic device, and the first broadcast message may include an identifier of the second electronic device. For another example, the first broadcast message may be used to request the first electronic device to establish a wireless communication connection to the third electronic device, and the first broadcast message may include an identifier of the third electronic device.

For example, step S330 in which the first electronic device establishes a connection to a target electronic device may be specifically implemented by using the following step: The first electronic device sends a response message to the second electronic device based on the first broadcast message. The target electronic device receives the response message, and is connected to a first wireless local area network based on the response message. Further, the first electronic device may establish a wireless connection to and perform service interaction with the target electronic device by using the first wireless local area network.

For example, the response message may include a device identifier of the first electronic device, and an identifier and a password of the first wireless local area network, for example, an SSID and a password of a router. The password of the first wireless local area network may be a password set by a system by default, or may be set by the user based on a requirement. For example, the response message may include a name and a password of a Wi-Fi network.

It should be noted that the first electronic device may be connected to the first wireless local area network before sending the response message to the target electronic device, or may be connected to the first wireless local area network after sending the response message to the target electronic device. This is not limited in this embodiment of this application.

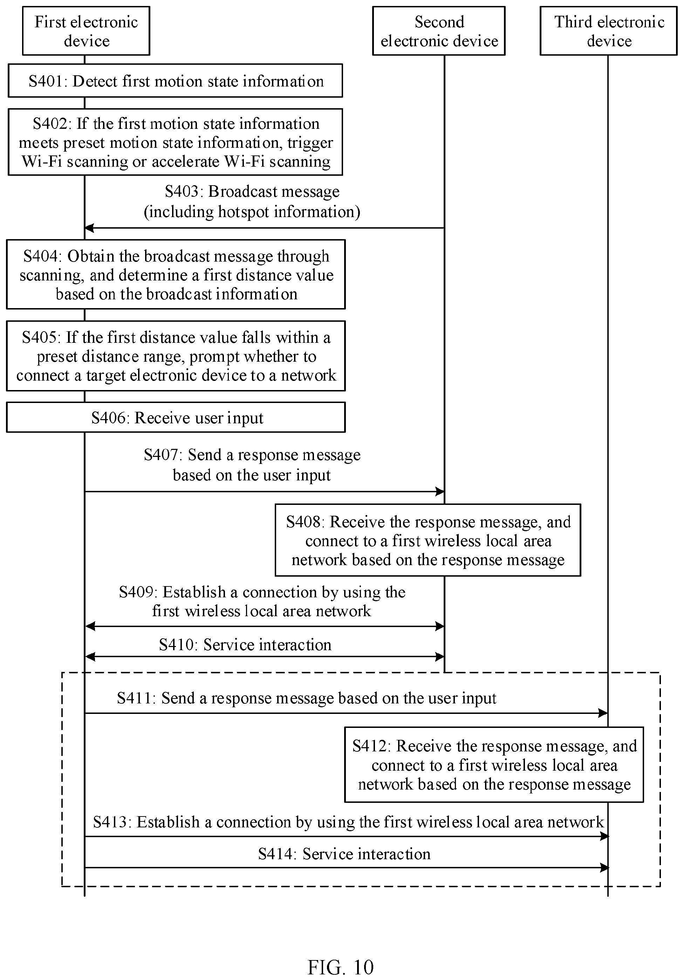

In this embodiment of this application, as shown in steps S401 to S414 in FIG. 10, the first electronic device detects the first motion state information of the first electronic device, and if the first motion state information meets the preset motion state information, triggers Wi-Fi scanning or accelerates Wi-Fi scanning. In this case, the second electronic device is ready to connect, and broadcasts a message to the outside. For example, the broadcast message includes information about an open hotspot, and the first electronic device and the second electronic device may temporarily communicate by using the open hotspot. If the first electronic device obtains the broadcast message through scanning, the first electronic device may determine the first distance value based on the broadcast message. If the first distance value falls within the preset distance range, the first electronic device prompts whether to connect the target electronic device to a network.

In a possible implementation, the target electronic device is the second electronic device. As shown in steps S407 to S410 in FIG. 10, if the first electronic device receives user input for confirming network connection, the first electronic device sends a response message (for example, including a name and a password of a Wi-Fi network) to the second electronic device based on the user input. After receiving the response message, the second electronic device extracts the name and the password of the Wi-Fi network from the response message, and is connected to the Wi-Fi network by using the name and the password of the Wi-Fi network. When both the first electronic device and the second electronic device are connected to the first wireless local area network, the first electronic device and the second electronic device may establish a wireless connection by using the first wireless local area network, and may further perform service interaction.

In another possible implementation, the target electronic device is the third electronic device. As shown in steps S411 to S414 in a dashed-line box in FIG. 10, if the first electronic device receives user input for confirming network connection, the first electronic device sends a response message (for example, including a name and a password of a Wi-Fi network) to the third electronic device based on the user input. After receiving the response message, the third electronic device extracts the name and the password of the Wi-Fi network from the response message, and is connected to the Wi-Fi network by using the name and the password of the Wi-Fi network. When both the first electronic device and the third electronic device are connected to the first wireless local area network, the first electronic device and the third electronic device may establish a wireless connection by using the first wireless local area network, and may further perform service interaction.

It should be noted that, the first electronic device may choose to perform either S407 to S410 or S411 to S414 in FIG. 10 based on the broadcast message. For example, the first electronic device may perform S407 to S410, to establish a wireless connection between the first electronic device and the second electronic device; or the first electronic device may perform S411 to S414, to establish a wireless connection between the first electronic device and the third electronic device. Certainly, the following implementation is not excluded in this embodiment of this application: The first electronic device may perform both S407 to S410 and S411 to S414, to establish a wireless connection between the first electronic device and both the second electronic device and the third electronic device. This may be specifically determined based on an actual use requirement. This is not limited in this embodiment of this application.

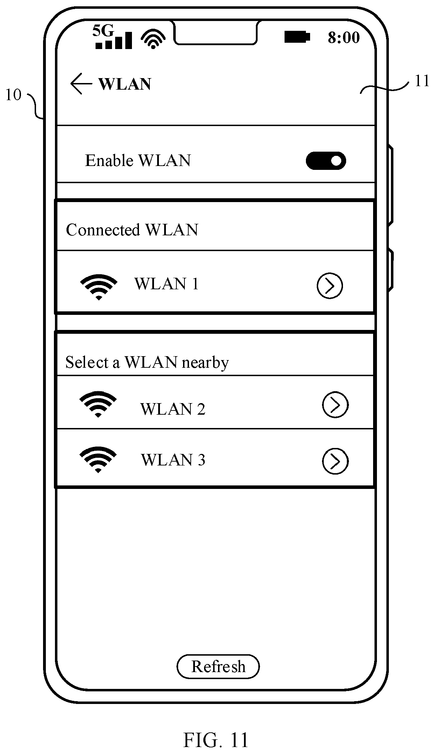

The following describes Embodiment 1 in detail with reference to FIG. 11 to FIG. 13 by using an example in which the first electronic device is a mobile phone 10, the target electronic device is the second electronic device, and the second electronic device is a notebook computer 20.

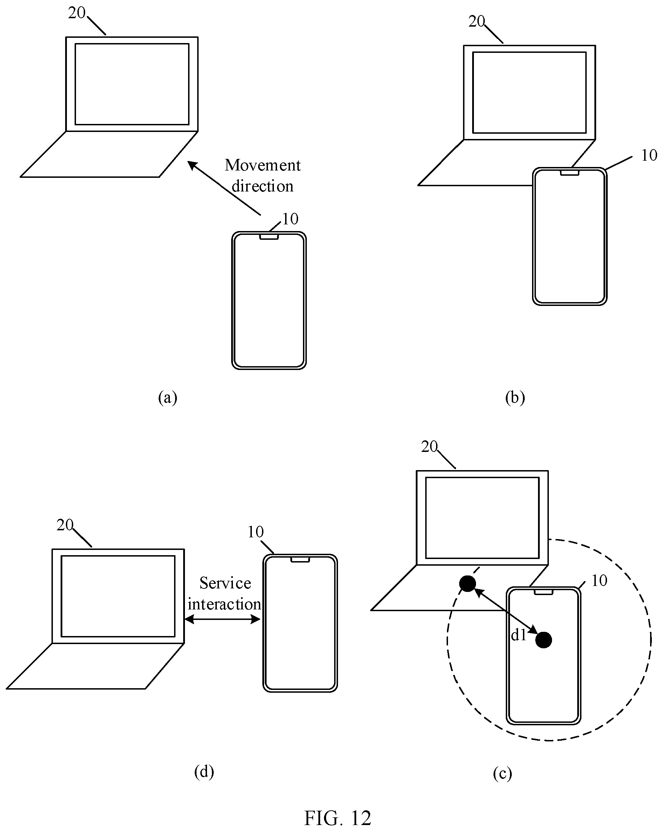

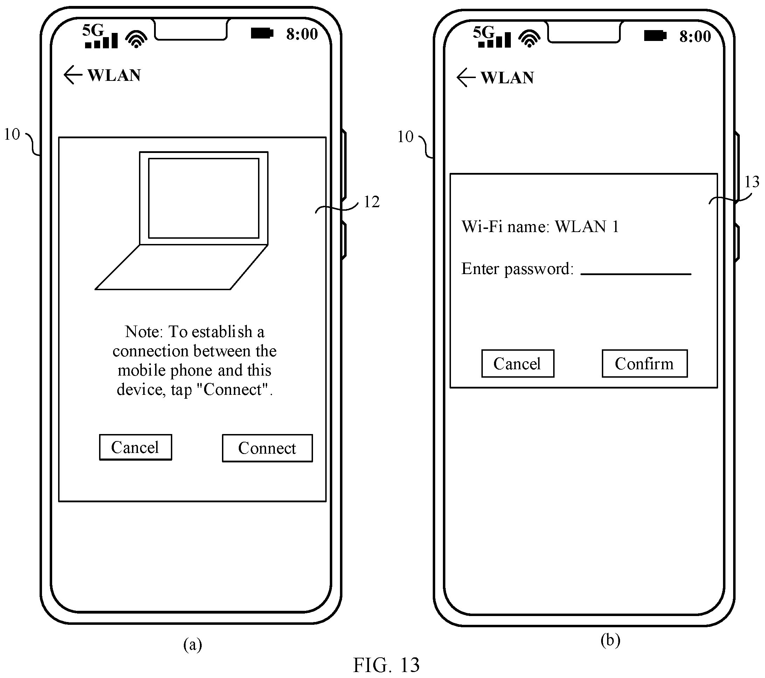

For example, FIG. 11 is a schematic diagram of a WLAN setting interface of a mobile phone. As shown in a WLAN setting interface 11 in FIG. 11, the mobile phone 10 has enabled a WLAN, and the mobile phone 10 has been connected to a router Wi-Fi network (it is assumed that a name of the Wi-Fi network is WLAN 1). In this case, if the user needs to establish a connection between and perform service interaction between the mobile phone 10 and the notebook computer 20, the user may perform an operation based on steps shown in FIG. 12 and FIG. 13.

As shown in (a) in FIG. 12, the mobile phone 10 is currently at a specific distance from the notebook computer 20, and the user triggers the notebook computer 20 to be powered on or enable a network connection function, so that the notebook computer 20 is in a state in which a network is to be connected. In this case, the notebook computer 20 broadcasts a message. As shown in (b) in FIG. 12, when the user holds the mobile phone 10 (in this case, the mobile phone 10 may be in a screen-on state or a screen-off state) to be close to and "touch" the notebook computer 20, the mobile phone 10 senses the "touch" behavior by using the first sensor (for example, an acceleration sensor). In this case, the mobile phone 10 is triggered to start scanning or accelerate scanning. As shown in (c) in FIG. 12, the mobile phone 10 obtains the broadcast message of the notebook computer 20 through scanning, detects a distance d1 between the mobile phone 10 and the notebook computer 20, and determines that the distance d1 falls within the preset distance range. In this way, the user triggers, by using the "touch" behavior, establishment of a connection and service interaction between the mobile phone 10 and the notebook computer 20.

Then, as shown in (a) in FIG. 13, the mobile phone 10 may display a prompt box 12: To establish a connection between the mobile phone and this device, tap "Connect", to prompt the user to choose whether to establish a connection. After the user taps the "Connect" option to confirm establishment of a connection, as shown in (b) in FIG. 13, the mobile phone 10 may display a prompt box 13, to display a name of a router Wi-Fi network to which the mobile phone 10 is currently connected: WLAN 1, and prompt the user to enter a Wi-Fi password. After the user enters the Wi-Fi password for confirmation, the mobile phone 10 sends the name and the password of the router Wi-Fi network to the notebook computer 20. Certainly, after the user taps the "Connect" option to confirm establishment of a connection, the mobile phone 10 may not display the prompt box 13, and the user does not need to enter the Wi-Fi password. Instead, the mobile phone 10 directly sends, to the notebook computer 20, the name and the password of the Wi-Fi network to which the mobile phone is currently connected. After receiving the name and the password of the Wi-Fi network, the notebook computer 20 is connected to the Wi-Fi network of the router by using the name and the password of the Wi-Fi network. Therefore, the mobile phone 10 and the notebook computer 20 access a same wireless local area network.

In this way, as shown in (d) in FIG. 12, the mobile phone 10 and the notebook computer 20 may establish a connection and perform service interaction by using the router Wi-Fi network, and may perform service interaction.

In Embodiment 1, the user may directly trigger, by using the "touch" behavior, establishment of a connection and service interaction between devices by using a wireless local area network, to implement an effect of a one-touch connection, and improve convenience of establishing a connection between devices and performing service interaction.

### Embodiment 2

In Embodiment 2, the first electronic device obtains, through scanning, the first broadcast message broadcast by the second electronic device, where the first broadcast message is used to indicate that the target electronic device is in a Bluetooth connectable state. For example, the first broadcast message may be used to indicate that the second electronic device is in a Bluetooth connectable state, where the first broadcast message may include a Bluetooth identifier (and a Bluetooth address) of the second electronic device, for example, a device model of the second electronic device may be used as the Bluetooth identifier of the second electronic device. For another example, the first broadcast message may be used to indicate that the third electronic device is in a Bluetooth connectable state, where the first broadcast message may include a Bluetooth identifier (and a Bluetooth address) of the third electronic device, for example, a device model of the third electronic device may be used as the Bluetooth identifier of the third electronic device.

For example, S330 in which the first electronic device establishes a connection to a target electronic device may be specifically implemented by using the following steps: The first electronic device sends a connection request message to the target electronic device based on the first broadcast message; the target electronic device receives the connection request message sent by the first electronic device, and sends a response message to the first electronic device, where the response message is used to indicate that the target electronic device confirms establishment of a Bluetooth connection to the first electronic device; and the first electronic device receives the response message, and establishes a Bluetooth wireless connection to the target electronic device based on the response message.

The connection request message may include a Bluetooth identifier (for example, a MAC address of the device) of the first electronic device, for example, a device model of the first electronic device may be used as the Bluetooth identifier of the first electronic device. Optionally, the Bluetooth identifier may be set by a system by default, or may be set by the user based on a requirement.

It should be noted that, the connection request message may further include Bluetooth pairing code, where the Bluetooth pairing code is used to perform authentication through password pairing when the devices are connected for the first time through Bluetooth, and no pairing is required when the devices are reconnected. From the perspective of the user, in a conventional password pairing manner, pairing code needs to be entered on the electronic device. Certainly, another pairing manner may be used. For example, the two parties only need to confirm that random numbers displayed on a screen of the electronic device are the same, and no password needs to be entered.

In one aspect, for a case in which the devices are connected for the first time through Bluetooth, if the user enables the first electronic device to be close to and "touch" the second electronic device, the first electronic device prompts to pair with the target electronic device, and then establish a connection. After the pairing is completed, a name of a paired device is added to a list of paired devices in a Bluetooth setting interface.

In another aspect, for a case in which the devices are connected again (also referred to as "reconnected") after pairing, because the name of the paired device is already displayed in the list of the paired devices in the Bluetooth setting interface after the pairing is completed, if the user enables the first electronic device to be close to and "touch" the second electronic device again, that is, the devices need to be reconnected, the first electronic device directly prompts to be connected to the target electronic device, and no pairing is required again, that is, a password-free reconnection.

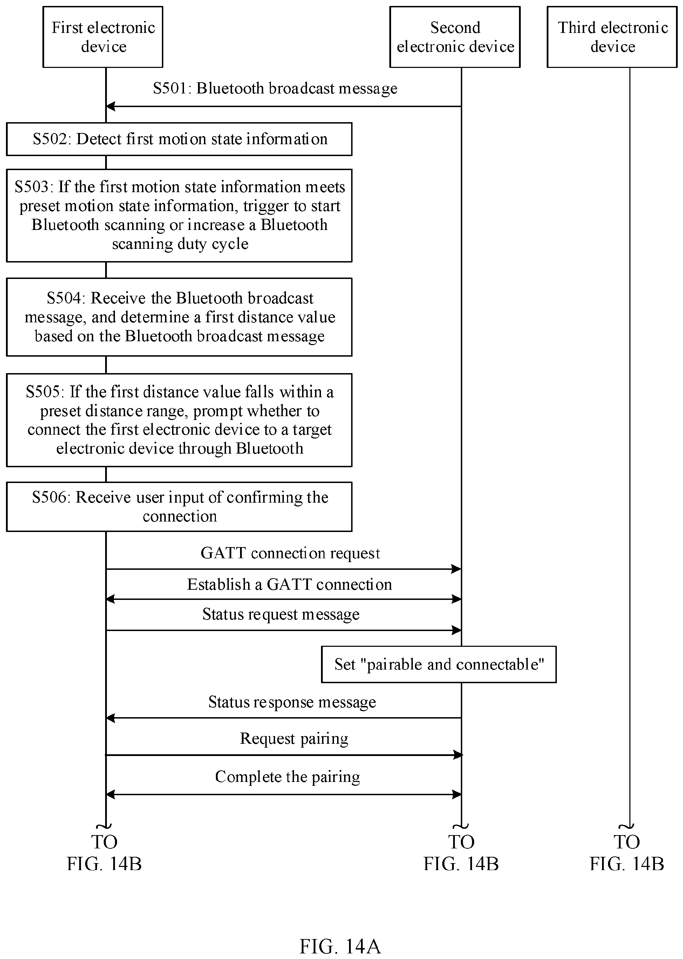

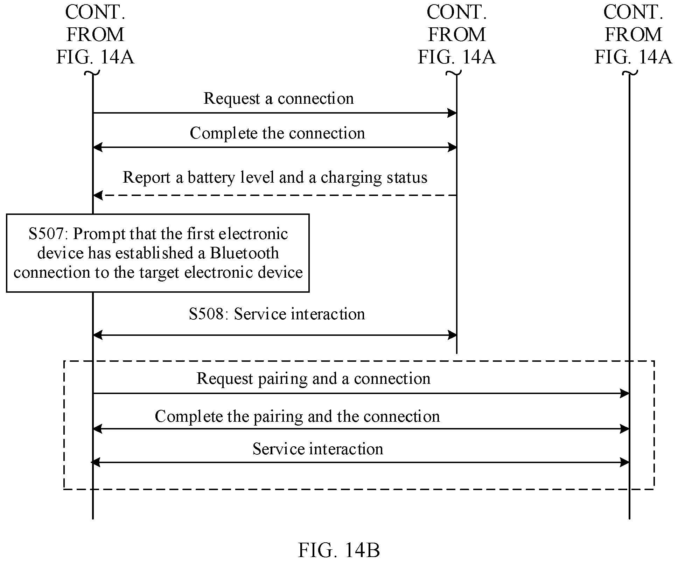

In this embodiment of this application, as shown in FIG. 14A and FIG. 14B, the first electronic device detects the first motion state information of the first electronic device, and if the first motion state information meets the preset motion state information, triggers Bluetooth scanning or increases a Bluetooth scanning duty cycle. In this case, the target electronic device is in a connectable state, and broadcasts a message to the outside through Bluetooth. For example, the broadcasting may be connectable virtual connection broadcasting. If the first electronic device obtains the broadcast message through scanning, the first electronic device may determine the first distance value based on the broadcast message. If the first distance value falls within the preset distance range, the first electronic device prompts whether to establish a Bluetooth connection to the target electronic device.

In a possible case, the target electronic device is the second electronic device. If the first electronic device receives user input for confirming a Bluetooth connection, the first electronic device sends a connection request to the second electronic device based on the user input, for example, the connection request includes a Bluetooth device identifier (for example, a MAC address) of the first electronic device. After receiving the connection request, the second electronic device extracts the Bluetooth device identifier from the connection request, establishes a Bluetooth connection to the first electronic device by using the Bluetooth device identifier, and may further perform service interaction.

In another possible case, the target electronic device is the third electronic device. As shown in a dashed-line box in FIG. 14A and FIG. 14B, if the first electronic device receives user input for confirming a Bluetooth connection, the first electronic device sends a connection request to the third electronic device based on the user input, for example, the connection request includes a Bluetooth device identifier of the first electronic device. After receiving the connection request, the third electronic device extracts the Bluetooth device identifier from the connection request, establishes a Bluetooth connection to the first electronic device by using the Bluetooth device identifier, and may further perform service interaction.

It should be noted that if the devices are connected for the first time through Bluetooth, pairing is required, and no pairing is required again for a paired connection.

Optionally, the first electronic device may display prompt information, to prompt that the first electronic device has established a connection to the target electronic device. Certainly, the target electronic device may also display prompt information, to prompt that the first electronic device has established a connection to the target electronic device. Then, the first electronic device and the target electronic device may perform service interaction.

It should be noted that, because Bluetooth low energy (bluetooth low energy, BLE) connections are all established based on the generic attribute profile (generic attribute profile, GATT) protocol, in a process of establishing the BLE connection, the first electronic device first sends a GATT connection request to the second electronic device, and the second electronic device receives the GATT connection request, so that the first electronic device establishes a GATT connection to the second electronic device.

Optionally, the first electronic device sends a status request message to the target electronic device. The target electronic device receives the status request message, sets "pairable and connectable" based on the status request message, and then returns a status response message to the first electronic device. In this way, the first electronic device learns that the target electronic device can be currently paired and connected. Then, the first electronic device sends a pairing request to the target electronic device, and the target electronic device receives the pairing request, so that the first electronic device completes pairing with the target electronic device. Then, the first electronic device sends a connection request to the target electronic device, and the target electronic device receives the connection request, so that the first electronic device completes a connection to the target electronic device.

Optionally, the target electronic device may report information such as a battery level and a charging status to the first electronic device, where the target electronic device is a rechargeable device. Optionally, the first electronic device may display the information such as the battery level and the charging status that are reported by the target electronic device. In this way, convenience of information transmission between devices can be improved, and the user can learn of the battery level and the charging status of the target electronic device in a timely manner by using the first electronic device, to improve user experience.

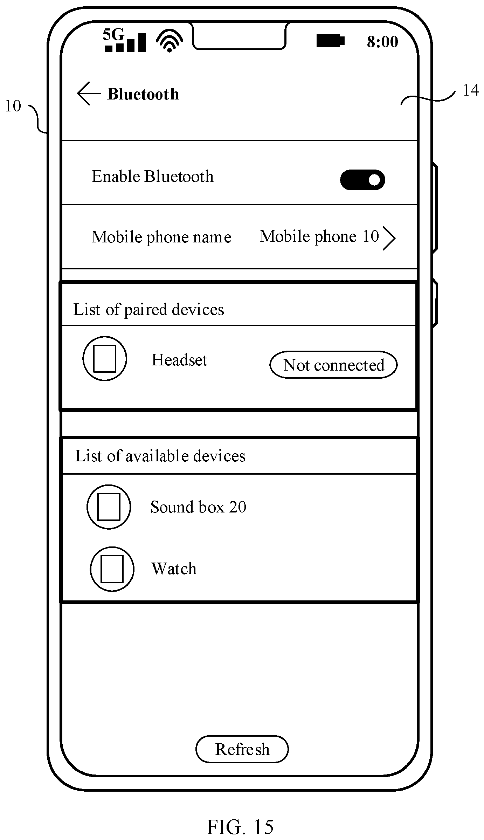

The following describes Embodiment 2 in detail with reference to FIG. 15 to FIG. 18 by using an example in which the first electronic device is a mobile phone 10, the target electronic device is the second electronic device, and the second electronic device is a sound box 20.

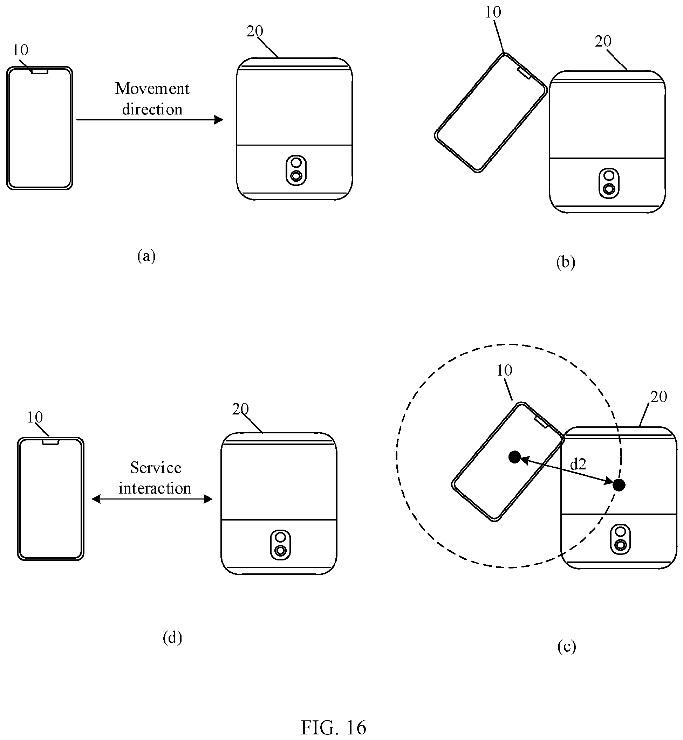

For example, FIG. 15 is a schematic diagram of a Bluetooth setting interface of a mobile phone. As shown in a Bluetooth setting interface 14 in FIG. 15, Bluetooth is enabled on the mobile phone 10. A list of paired devices and a list of available devices are further displayed in the Bluetooth setting interface 14, where the available device is a Bluetooth device that is found but is not paired. As shown in FIG. 15, the mobile phone 10 currently does not establish a Bluetooth connection to another device. In this case, if the user needs to establish a Bluetooth connection between the mobile phone 10 and the sound box 20, the user may perform an operation based on steps shown in FIG. 16.

As shown in (a) in FIG. 16, the mobile phone 10 is currently at a specific distance from the sound box 20, and the user triggers the sound box 20 to be powered on or enable a network connection function, so that the sound box 20 is in a connectable state. In this case, the sound box 20 broadcasts a message through Bluetooth. As shown in (b) in FIG. 16, when the user holds the mobile phone 10 (in this case, the mobile phone 10 may be in a screen-on state or a screen-off state) to be close to and "touch" the sound box 20, the mobile phone 10 senses the "touch" behavior by using the first sensor (for example, an acceleration sensor). In this case, the mobile phone 10 is triggered to start scanning or accelerate scanning. As shown in (c) in FIG. 16, the mobile phone 10 obtains the broadcast message of the sound box 20 through scanning, detects a distance d2 between the mobile phone 10 and the sound box 20, and determines that the distance d2 falls within the preset distance range. In this way, the user can directly trigger, by using the "touch" behavior, establishment of a connection and service interaction between the mobile phone 10 and the sound box 20.

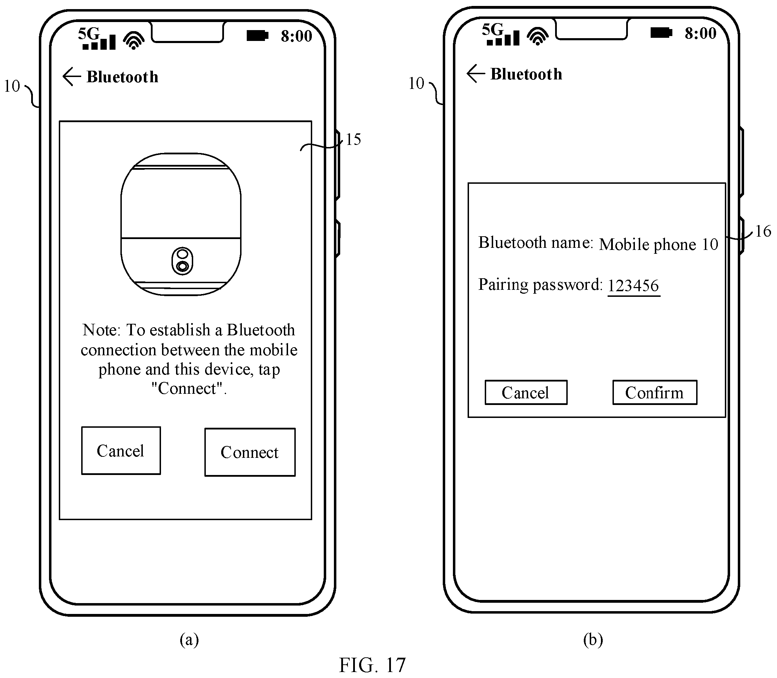

Then, as shown in (a) in FIG. 17, the mobile phone 10 may display a prompt box 15: To establish a Bluetooth connection between the mobile phone and the device, tap "Connect", to prompt the user to choose whether to establish a Bluetooth connection. After the user taps the "Connect" option to confirm establishment of a connection, as shown in (b) in FIG. 17, the mobile phone 10 may display a prompt box 16, to display a Bluetooth name (for example, the mobile phone 10) of the mobile phone 10, and prompt the user to enter pairing code. After the user enters the pairing code for confirmation, the mobile phone 10 sends the Bluetooth name and the pairing code to the sound box 20. After receiving the Bluetooth name and the pairing code, the sound box 20 may complete pairing with the mobile phone 10 by using the Bluetooth name and the pairing code, and establish a Bluetooth connection.

In this way, as shown in (d) in FIG. 16, the mobile phone 10 and the sound box 20 may establish a wireless connection through Bluetooth, and may further perform service interaction.

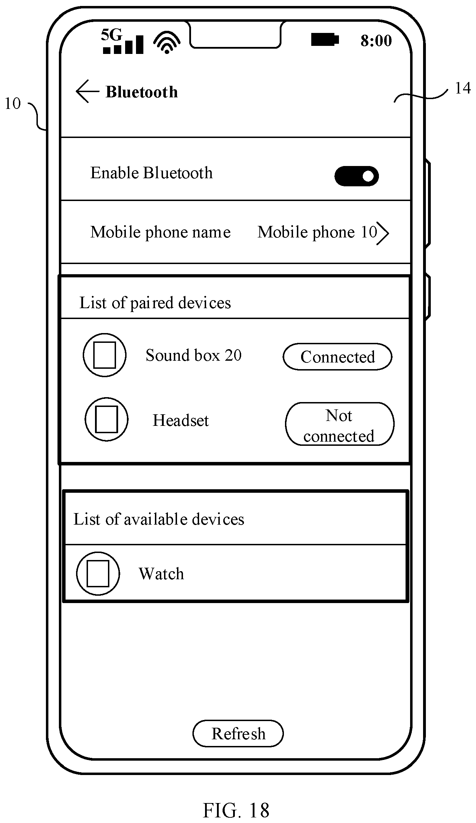

With reference to FIG. 15, as shown in FIG. 18, after a Bluetooth connection is established between the mobile phone 10 and the sound box 20, the sound box 20 is added to the list of the paired devices in the Bluetooth setting interface 14, and a "connected" icon indicates that the sound box 20 is connected to the mobile phone 10.

In Embodiment 2, the user may enable two devices to "touch" to trigger establishment of a Bluetooth connection between the two devices, so as to implement an effect of a one-touch connection between devices, and there is no need to perform a series of operations such as first searching, and then pairing and connecting in the Bluetooth setting interface. This improves convenience of establishing a connection between devices and performing service interaction.

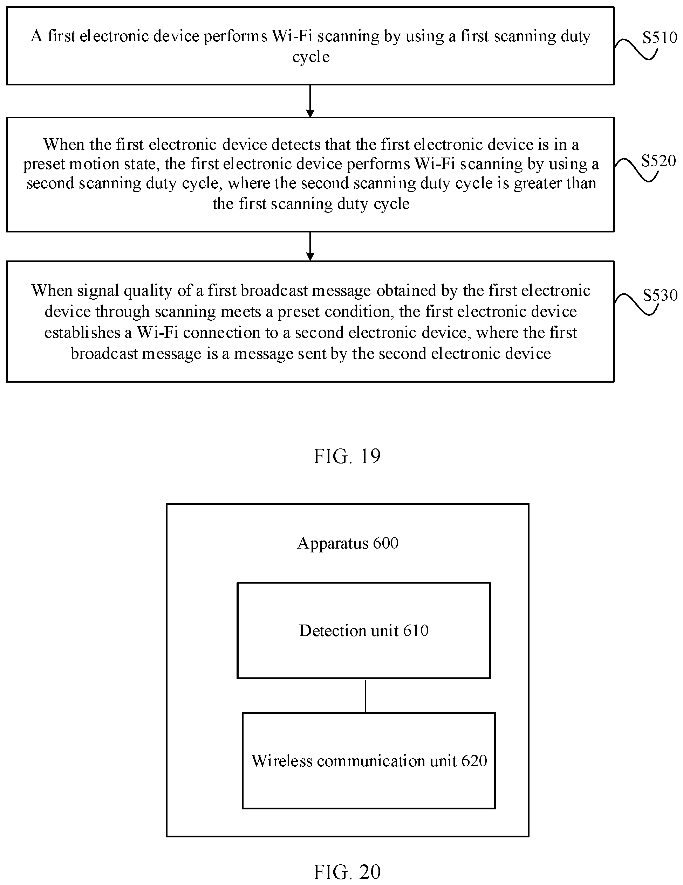

As shown in FIG. 19, this application provides a method for establishing a wireless connection between devices through touching. The method includes the following steps S510 to S530.

S510: A first electronic device performs Wi-Fi scanning by using a first scanning duty cycle.

The Wi-Fi scanning is used to discover another electronic device around the first electronic device.

S520: When the first electronic device detects that the first electronic device is in a preset motion state, the first electronic device performs Wi-Fi scanning by using a second scanning duty cycle, where the second scanning duty cycle is greater than the first scanning duty cycle.

S530: When signal quality of a first broadcast message obtained by the first electronic device through scanning meets a preset condition, the first electronic device establishes a Wi-Fi connection to a second electronic device, where the first broadcast message is a message sent by the second electronic device.

The scanning duty cycle is a time ratio of a scanning window in one cycle. If the scanning duty cycle is larger, a probability of obtaining a broadcast message through scanning is higher, and correspondingly, more power is consumed. If the scanning duty cycle is smaller, a probability of obtaining a broadcast message through scanning is lower, and correspondingly, less power is consumed. Because the second scanning duty cycle is greater than the first scanning duty cycle, scanning can be accelerated, so that the first electronic device quickly discovers another electronic device around the first electronic device.

In the foregoing solution, when the first electronic device detects that the first electronic device approaches or touches the second electronic device, the first electronic device may accelerate Wi-Fi scanning, so that the first electronic device quickly discovers the second electronic device. In this case, if the signal quality of the broadcast message that is of the second electronic device and that is obtained by the first electronic device through scanning meets the preset condition, quick establishment of a Wi-Fi connection between the two devices may be triggered, to implement an effect of a one-touch connection between devices. Because the scanning duty cycle of the first electronic device is increased, the first electronic device can accelerate scanning to obtain the first broadcast signal, so that the first electronic device can discover a to-be-connected device more quickly. This helps improve a speed of establishing a connection and performing service interaction between devices. In addition, no NFC apparatus is required, so that a hardware requirement on the electronic device can be reduced.

Optionally, whether the signal quality meets the preset condition may be determined by using at least one of the following parameters: an RSSI, an RSRP, and an SNR. For example, the RSSI is used as an example. When an RSSI value of the first broadcast message received by the first electronic device is greater than a preset threshold, the first electronic device may determine that the signal quality meets the preset condition.

In some embodiments, the preset motion state includes at least one of the following: the first electronic device moves towards the second electronic device, and the first electronic device touches the second electronic device. The first electronic device may detect motion state information or a motion parameter of the first electronic device by using a built-in sensor, and determine a device motion state based on the motion state information or the motion parameter.

For example, the sensor may be at least one of the following: an acceleration sensor, an optical proximity sensor, a Hall effect sensor, and a gyroscope sensor, and certainly, may be any other sensor that meets an actual use requirement.

In some embodiments, after the signal quality of the first broadcast message received by the first electronic device meets the preset condition, the method for establishing a wireless connection between devices through touching further includes: The first electronic device displays a first prompt message, where the first prompt message is used to prompt whether to establish a Wi-Fi connection to the second electronic device. In this case, that the first electronic device establishes a Wi-Fi connection to a second electronic device includes: In response to a connection confirmation operation of a user on the first prompt message, the first electronic device establishes a Wi-Fi connection to the second electronic device. In this way, a one-touch connection between devices can be implemented based on an actual use requirement of the user, to improve user experience.

In some embodiments, after the first electronic device establishes a Wi-Fi connection to the second electronic device, the method for establishing a wireless connection between devices through touching further includes: The first electronic device sends first service data related to a first service to the second electronic device; and/or the first electronic device receives the first service data sent by the second electronic device. In this way, after a one-touch connection between devices is implemented, service data is quickly exchanged between devices, to improve an interaction experience function between devices.

In some embodiments, the method for establishing a wireless connection between devices through touching further includes: When the first electronic device detects that the first electronic device is in the preset motion state, the first electronic device sends a first indication message to the second electronic device, where the first indication message is used to indicate the second electronic device to start to broadcast the first broadcast message or increase a frequency of broadcasting the first broadcast message. Because a broadcast frequency of the second electronic device is increased, the second electronic device can be discovered more quickly. This helps improve a speed of establishing a connection and performing service interaction between devices.

In some embodiments, the first broadcast message includes a device identifier and Wi-Fi channel information of the second electronic device. That the first electronic device establishes a Wi-Fi connection to a second electronic device includes: The first electronic device establishes a Wi-Fi connection to the second electronic device based on the first broadcast message.

The Wi-Fi channel information may indicate a Wi-Fi channel supported by the second electronic device, and the first electronic device may send a connection request message to the second electronic device based on the device identifier of the second electronic device, so that the first electronic device establishes a Wi-Fi connection to the second electronic device based on the Wi-Fi channel information.

In some embodiments, the first broadcast message further includes a device identifier of a third electronic device. The method for establishing a wireless connection between devices through touching further includes: The first electronic device establishes a Wi-Fi connection to the third electronic device. In this way, in this embodiment of this application, an effect of a one-touch connection between two devices is implemented, and an effect of a one-touch connection between more devices can also be implemented.

The embodiments described in this specification may be independent solutions, or may be combined based on internal logic, to implement different technical effects. These solutions fall within the protection scope of this application. To implement the functions in the method provided in the foregoing embodiments of this application, the first electronic device may include a hardware structure and/or a software module, to implement the functions in a form of the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions.

FIG. 20 is a schematic block diagram of an apparatus 600 for establishing a wireless connection according to an embodiment of this application. The apparatus 600 is a first electronic device, and the apparatus 600 includes a detection unit 610 and a wireless communication unit 620.

The detection unit 610 is configured to: detect first motion state information of the first electronic device by using a first sensor, and detect a first distance value between the first electronic device and a second electronic device.

The wireless communication unit 620 is configured to: when the first motion state information meets preset motion state information and the first distance value falls within a preset distance range, establish a wireless connection between the first electronic device and the target electronic device.

The target electronic device is the second electronic device or a third electronic device indicated by the second electronic device by using a broadcast message.

In a possible embodiment, the first sensor is a sensor configured to detect movement and/or touching of the first electronic device, and the preset motion state information is used to indicate that the first electronic device moves towards the second electronic device and/or touches the second electronic device.

For example, the first sensor may be at least one of the following: an acceleration sensor, an optical proximity sensor, a Hall effect sensor, and a gyroscope sensor, and certainly, may be any other sensor that meets an actual use requirement. For example, the first sensor is an acceleration sensor, the first motion state information includes a plurality of speed values or acceleration values that change with time, and the preset motion state information indicates that a speed value or an acceleration value changes and a change amount is greater than a preset threshold.

In a possible embodiment, the apparatus 600 for establishing a wireless connection provided in this embodiment of this application further includes a processing unit. The processing unit is configured to: after the detection unit 610 detects the first motion state information of the first electronic device by using the first sensor, if the first motion state information meets the preset motion state information, perform a first action, where the first action includes any one of the following: enabling a scanning function of the first electronic device, and when the scanning function of the first electronic device is enabled, increasing a scanning duty cycle.

In a possible embodiment, the wireless communication unit 620 is further configured to: if the first motion state information meets the preset motion state information, send a first indication message to the second electronic device, where the first indication message is used to indicate the second electronic device to perform a second action, and the second action includes any one of the following: starting to broadcast a first broadcast message, and when a broadcast function of the second electronic device is enabled, increasing a frequency of broadcasting the first broadcast message.

In a possible embodiment, the processing unit is configured to: when the first broadcast message broadcast by the second electronic device is obtained through scanning, calculate a first distance value based on the first broadcast message.

In a possible embodiment, the first broadcast message includes a device identifier and first channel information of the target electronic device, and the second channel information is used to indicate a Wi-Fi channel or a Bluetooth channel. The wireless communication unit 620 is specifically configured to establish a wireless connection to the target electronic device through Wi-Fi or Bluetooth based on the first broadcast message.

In another possible embodiment, the first broadcast message includes a device identifier of the target electronic device. The wireless communication unit 620 is specifically configured to: send a response message to the target electronic device based on the first broadcast message obtained through scanning, where the response message includes a device identifier and second channel information of the first electronic device, and the second channel information is used to indicate a Wi-Fi channel or a Bluetooth channel; and establish a wireless connection to the first electronic device through Wi-Fi or Bluetooth based on the first broadcast message and the response message.

In a possible embodiment, the wireless communication unit 620 is specifically configured to: send first service data related to a first service to the target electronic device; or receive the first service data sent by the target electronic device.

In a possible embodiment, the apparatus 600 for establishing a wireless connection provided in this embodiment of this application further includes a display unit. The display unit is configured to display a first prompt message, where the first prompt message is used to prompt whether to establish a wireless connection to the target electronic device. The wireless communication unit 620 is specifically configured to: when a connection confirmation operation of a user on the first prompt message is received, establish a wireless connection between the first electronic device and the target electronic device.

This embodiment of this application provides an apparatus for establishing a wireless connection. It may be detected that the motion state information of the first electronic device meets the preset motion state information, and it may be detected that the distance between the first electronic device and the second electronic device falls within the preset distance range in which a wireless connection can be established, so that the first electronic device can be triggered to quickly establish a wireless connection to the second electronic device or another electronic device associated with the second electronic device, and perform service interaction. In the foregoing method for establishing a wireless connection between devices through touching, because no NFC apparatus is required, that is, an NFC card reader and an NFC tag do not need to be closely attached to each other to trigger and start a connection and service interaction between electronic devices, the apparatus provided in this embodiment of this application can reduce a hardware requirement on the electronic device.

The apparatus 600 according to this embodiment of this application may correspondingly perform the method described in embodiments of this application. In addition, the foregoing and other operations and/or functions of the modules in the apparatus 600 are separately intended to implement corresponding procedures of the method. For brevity, details are not described herein again.

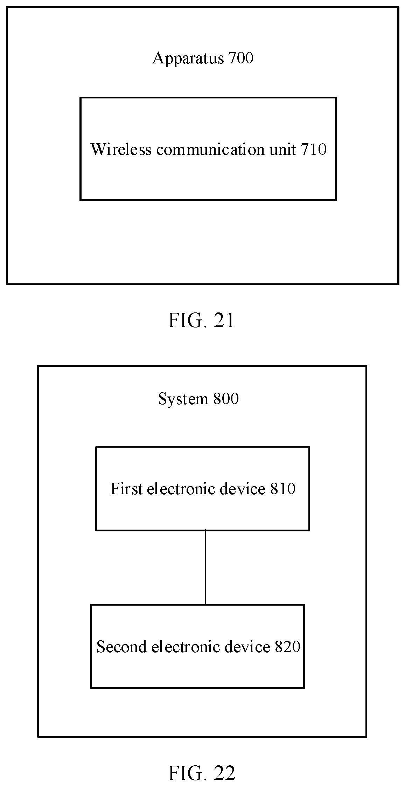

FIG. 21 is a schematic block diagram of an apparatus 700 for establishing a wireless connection according to an embodiment of this application. The apparatus 700 is a second electronic device, and the apparatus 700 includes a wireless communication unit 710.

The wireless communication unit 710 is configured to: when first motion state information of a first electronic device meets preset motion state information and a first distance value falls within a preset distance range, establish a wireless connection between a target electronic device and the first electronic device.

The first distance value is used to indicate a distance between the first electronic device and a second electronic device, and the target electronic device is the second electronic device or a third electronic device indicated by the second electronic device by using a broadcast message.

In a possible embodiment, the preset motion state information is used to indicate that the first electronic device moves towards the second electronic device and/or touches the second electronic device.

In a possible embodiment, the wireless communication unit 710 is further configured to: when the first motion state information meets the preset motion state information, receive a first indication message sent by the first electronic device, and perform a second action, where the second action includes any one of the following: starting to broadcast a first broadcast message, and when a broadcast function of the second electronic device is enabled, increasing a frequency of broadcasting the first broadcast message, and the first indication message is used to indicate the second electronic device to perform the second action.

In a possible embodiment, the apparatus 700 for establishing a wireless connection provided in this embodiment of this application further includes a detection unit 720, where the detection unit 720 is configured to detect the first motion state information; and if the second electronic device determines that the first motion state information meets the preset motion state information, perform a third action, where the third action includes any one of the following: starting to broadcast a first broadcast message, and increasing a frequency of broadcasting the first broadcast message.

In a possible embodiment, the first broadcast message includes a device identifier and first channel information of the target electronic device. The wireless communication unit 710 is specifically configured to establish a wireless connection to the first electronic device through Wi-Fi or Bluetooth based on the first broadcast message.

In another possible embodiment, the first broadcast message includes a device identifier of the target electronic device. The wireless communication unit 710 is specifically configured to: receive a response message sent by the first electronic device, where the response message includes a device identifier and second channel information of the first electronic device, and the second channel information is used to indicate a Wi-Fi channel or a Bluetooth channel; and establish a wireless connection to the first electronic device through Wi-Fi or Bluetooth based on the first broadcast message and the response message.

In a possible embodiment, the target electronic device is further configured to receive first service data that is related to a first service and that is sent by the first electronic device; or send the first service data to the first electronic device.

It should be noted that the apparatus 600 for establishing a wireless connection may be the electronic device 10 in FIG. 1, the detection unit 610 may be the sensor module 180 in the electronic device 10, the wireless communication unit 620 may be the wireless communication module 160 in the electronic device 10, and the display unit may be the display 194 in the electronic device 10. The apparatus 700 for establishing a wireless connection may be the electronic device 20 in FIG. 1, the wireless communication unit 710 may be the wireless communication module in the electronic device 20, and the detection unit 720 may be the sensor module in the electronic device 20.

FIG. 22 is a schematic diagram of a structure of a system 800 for establishing a wireless connection according to an embodiment of this application. The system 800 includes a first electronic device 810 and a second electronic device 820. The first electronic device 810 may correspond to the apparatus 600 in the foregoing embodiment, and the second electronic device 820 may correspond to the apparatus 700 in the foregoing embodiment.

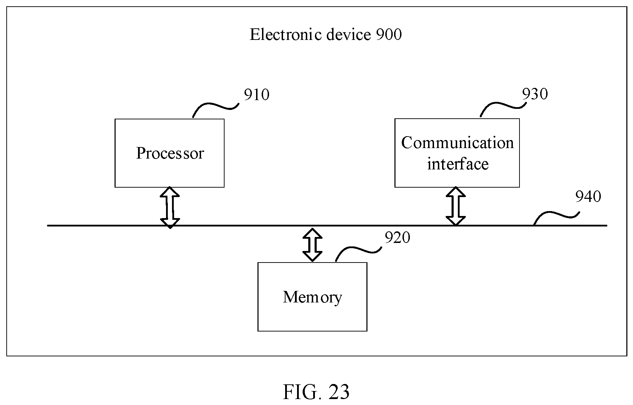

FIG. 23 is a schematic diagram of a structure of an electronic device 900 according to an embodiment of this application. The electronic device 900 includes a processor 910, a memory 920, a communication interface 930, and a bus 940.

In a possible implementation, the processor 910 in the electronic device 900 shown in FIG. 23 may correspond to the detection unit 610 in the apparatus 600 in FIG. 20, and the communication interface 930 may correspond to the wireless communication unit 620 in the apparatus 600 in FIG. 20.

The processor 910 may be connected to the memory 920. The memory 920 may be configured to store program code and data. Therefore, the memory 920 may be a storage unit in the processor 910, an external storage unit independent of the processor 910, or a component including the storage unit in the processor 910 and the external storage unit independent of the processor 910.

Optionally, the electronic device 900 may further include a bus 940. The memory 920 and the communication interface 930 may be connected to the processor 910 by using the bus 940. The bus 940 may be a peripheral component interconnect (peripheral component interconnect, PCI) bus, an extended industry standard architecture (extended industry standard architecture, EISA) bus, or the like. The bus 940 may be categorized into an address bus, a data bus, a control bus, or the like. For ease of representation, only one line is used in FIG. 23 for representation, but it does not mean that there is only one bus or one type of bus.

It should be understood that, in this embodiment of this application, the processor 910 may be a central processing unit (central processing unit, CPU). The processor may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like. Alternatively, the processor 910 is configured to execute a related program by using one or more integrated circuits, to implement technical solutions provided in embodiments of this application.

The memory 920 may include a read-only memory and a random access memory, and provides instructions and data for the processor 910. A part of the processor 910 may further include a non-volatile random access memory. For example, the processor 910 may further store device type information.

When the electronic device 900 runs, the processor 910 executes computer-executable instructions in the memory 920, to perform the operation steps of the foregoing method by using the apparatus 600.

It should be understood that the electronic device 900 according to this embodiment of this application may correspond to the apparatus 600 in embodiments of this application. In addition, the foregoing and other operations and/or functions of the units in the apparatus 600 are separately intended to implement corresponding procedures of the method. For brevity, details are not described herein again.

Optionally, in some embodiments, an embodiment of this application further provides a computer readable medium. The computer readable medium stores program code. When the computer program code is run on a computer, the computer is enabled to perform the methods in the foregoing aspects.

Optionally, in some embodiments, an embodiment of this application further provides a computer program product. The computer program product includes computer program code. When the computer program code is run on a computer, the computer is enabled to perform the methods in the foregoing aspects.

In embodiments of this application, the electronic device includes a hardware layer, an operating system layer running above the hardware layer, and an application layer running above the operating system layer. The hardware layer may include hardware such as a central processing unit (central processing unit, CPU), a memory management unit (memory management unit, MMU), and a memory (also referred to as a primary memory). An operating system at the operating system layer may be any one or more computer operating systems that implement service processing through a process (process), for example, a Linux operating system, a Unix operating system, an Android operating system, an iOS operating system, or a Windows operating system. The application layer may include applications such as a browser, an address book, word processing software, and instant messaging software.

Aspects or features of this application may be implemented as a method, an apparatus, or a product that uses standard programming and/or engineering technologies. The term "product" used in this specification may cover a computer program that can be accessed from any computer-readable component, carrier or medium. For example, the computer-readable medium may include but is not limited to a magnetic storage component (for example, a hard disk, a floppy disk, or a magnetic tape), an optical disc (for example, a compact disc (compact disc, CD), or a digital versatile disc (digital versatile disc, DVD)), a smart card, and a flash memory component (for example, an erasable programmable read-only memory (erasable programmable read-only memory, EPROM), a card, a stick, or a key drive).

Various storage media described in this specification may indicate one or more devices and/or other machine-readable media that are configured to store information. The term "machine-readable media" may include but is not limited to a radio channel and various other media that can store, include, and/or carry instructions and/or data.

It should be understood that the processor mentioned in embodiments of this application may be a central processing unit (central processing unit, CPU), or may be another general-purpose processor, a digital signal processor (digital signal processor, DSP), an application-specific integrated circuit (application specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It may be understood that the memory mentioned in embodiments of this application may be a volatile memory or a nonvolatile memory, or may include a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory RAM. For example, the RAM may be used as an external cache. As an example instead of a limitation, the RAM may include the following plurality of forms: a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that, when the processor is a general-purpose processor, a DSP, an ASIC, an FPGA or another programmable logic device, a discrete gate or a transistor logic device, or a discrete hardware component, the memory (storage module) may be integrated into the processor.

It should be further noted that the memory described in this specification aims to include but is not limited to these memories and any memory of another proper type.

A person of ordinary skill in the art may be aware that, in combination with the examples described in the embodiments disclosed in this specification, units and steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the protection scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in another manner. For example, the described apparatus embodiment is merely an example. For example, the unit or module division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in an electronic form, a mechanical form, or another form.

The foregoing units described as separate parts may or may not be physically separate, and parts displayed as units may or may not be physical units, may be located in one position, or may be distributed on a plurality of network units. Some or all of the units may be selected based on an actual requirement to achieve the objectives of the solutions of embodiments.

In addition, functional units in embodiments of this application may be integrated into one unit, each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a computer software product. The computer software product is stored in a storage medium, and includes several instructions, and the instructions is used to enable a computer device (which may be a personal computer, a server, a network device, or the like) to perform all or some of the steps of the methods described in embodiments of this application. The foregoing storage medium may include but is not limited to any medium that can store program code, such as a USB flash drive, a removable hard disk, a read-only memory (read-only memory, ROM), a random access memory (random access memory, RAM), a magnetic disk, or an optical disc.

Unless otherwise defined, all technical and scientific terms used in this specification have same meanings as those usually understood by a person skilled in the art of this application. The terms used in this specification of this application are merely used to describe specific embodiments, and are not intended to limit this application.

The foregoing descriptions are merely specific implementations of this application, but are not intended to limit the protection scope of this application. Any variation or replacement readily figured out by a person skilled in the art within the technical scope disclosed in this application shall fall within the protection scope of this application. The invention is defined by the appended claims.

## Claims

1. A method for establishing a wireless connection between devices through touching, wherein the method comprises:
performing (S510), by a first electronic device (10, 600), wireless fidelity Wi-Fi scanning by using a first scanning duty cycle, wherein the Wi-Fi scanning is used to discover another electronic device around the first electronic device (10,600),
when the first electronic device (10, 600) detects that the first electronic device is in a preset motion state, performing (S520), by the first electronic device, Wi-Fi scanning by using a second scanning duty cycle, wherein the second scanning duty cycle is greater than the first scanning duty cycle; and
when signal quality of a first broadcast message obtained by the first electronic device through scanning meets a preset condition, establishing (S530), by the first electronic device (10, 600), a Wi-Fi connection to a second electronic device (20, 700), wherein the first broadcast message is a message sent by the second electronic device (20, 700),
wherein the preset motion state is the following: the first electronic device (10, 600) moves towards the second electronic device (20, 700), and then the first electronic (10, 600) device touches the second electronic device (20, 700),
wherein the touching is detected by an acceleration sensor of the first electronic device (10, 600) when an acceleration value in each axis direction has a pulse peak, or a resultant acceleration value in all axis directions has a pulse peak,
wherein the first broadcast message comprises a device identifier and Wi-Fi channel information of the second electronic device (20, 700), and
wherein the establishing, by the first electronic device (10, 600), a Wi-Fi connection to a second electronic device (20, 700) comprises:
establishing, by the first electronic device, the Wi-Fi connection to the second electronic device (20, 700) based on the first broadcast message

2. The method according to claim 1, wherein after the signal quality of the first broadcast message received by the first electronic device (10, 600) meets the preset condition, the method further comprises:
displaying, by the first electronic device (10, 600), a first prompt message, wherein the first prompt message is used to prompt whether to establish a Wi-Fi connection to the second electronic device (20, 700), and
the establishing, by the first electronic device (10, 600), a Wi-Fi connection to a second electronic device (20, 700) comprises:
in response to a connection confirmation operation of a user on the first prompt message, establishing, by the first electronic device (10, 600), the Wi-Fi connection to the second electronic device (20, 700).

3. The method according to claim 1 or 2, wherein after the establishing, by the first electronic device (10, 600), a Wi-Fi connection to a second electronic device, the method further comprises:
sending, by the first electronic device (10, 600), first service data related to a first service to the second electronic device (20, 700); and/or
receiving, by the first electronic device (10, 600), the first service data sent by the second electronic device (20, 700).

4. The method according to any one of claims 1 to 3, wherein the method further comprises:
when the first electronic device (10, 600) detects that the first electronic device (10, 600) is in the preset motion state, sending, by the first electronic device (10, 600), a first indication message to the second electronic device (20, 700), wherein the first indication message is used to indicate the second electronic device (20, 700) to start to broadcast the first broadcast message or increase a frequency of broadcasting the first broadcast message

5. The method according to any one of claims 1 to 4, wherein the first broadcast message further comprises a device identifier of a third electronic device, and the method further comprises:
establishing, by the first electronic device (10, 600), a Wi-Fi connection to the third electronic device

6. An electronic device (10, 600), wherein the electronic device (10, 600) is a first electronic device (10, 600), and the electronic device (10, 600) comprises a Wi-Fi unit (620), a detection unit (610), a processing unit and an acceleration sensor, wherein
the Wi-Fi unit (620) is configured to perform wireless fidelity Wi-Fi scanning by using a first scanning duty cycle, wherein the Wi-Fi scanning is used to discover another electronic device around the first electronic device (10, 600);
the detection unit (610) is configured to detect a motion state of the first electronic device (10, 600) relative to the another electronic device;
the Wi-Fi unit (620) is further configured to: when the detection unit (610) detects that the first electronic device (10, 600) is in a preset motion state, perform scanning by using a second scanning duty cycle, wherein the second scanning duty cycle is greater than the first scanning duty cycle; and
the processing unit is configured to: when signal quality of a first broadcast message obtained by the first electronic device through scanning meets a preset condition, establish a Wi-Fi connection between the first electronic device (10, 600) and a second electronic device (20, 700) ) based on the first broadcast message, wherein the first broadcast message is a message sent by the second electronic device (20, 700) and comprises a device identifier and Wi-Fi channel information of the second electronic device (20, 700), wherein the preset motion state is the following: the first electronic device (10, 600) moves towards the second electronic device (20, 700), and then the first electronic device (10, 600) touches the second electronic device (20, 700),
wherein the acceleration sensor is adapted to detected the touching when an acceleration value in each axis direction has a pulse peak, or a resultant acceleration value in all axis directions has a pulse peak.

7. The electronic device (10, 600) according to claim 6, further comprising a display unit, wherein
the display unit is configured to: after the signal quality of the first broadcast message obtained by the Wi-Fi unit through scanning meets the preset condition, display a first prompt message, wherein the first prompt message is used to prompt whether to establish a Wi-Fi connection to the second electronic device (20, 700); and
the processing unit is specifically configured to: in response to a connection confirmation operation of a user on the first prompt message, establish the Wi-Fi connection to the second electronic device (20, 700).

8. The electronic device according to claim 6 or 7, wherein the Wi-Fi unit is further configured to: after the first electronic device (10, 600) establishes the Wi-Fi connection to the second electronic device (20, 700), send first service data related to a first service to the second electronic device (20, 700), and/or receive the first service data sent by the second electronic device (20, 700).

9. The electronic device (10, 600) according to claim 8, wherein the Wi-Fi unit (620) is further configured to: when the detection unit (610) detects that the first electronic device (10, 600) is in the preset motion state, send a first indication message to the second electronic device (20, 700), wherein the first indication message is used to indicate the second electronic device (20, 700) to start to broadcast the first broadcast message or increase a frequency of broadcasting the first broadcast message.

10. The electronic device (10, 600) according to any one of claims 6 to 9, wherein the first broadcast message further comprises a device identifier of a third electronic device, and
the processing unit is further configured to establish a Wi-Fi connection between the first electronic device (10, 600) and the third electronic device

11. A chip, wherein the chip comprises a processor, the processor is coupled to a memory, and the processor is configured to read and execute a computer program stored in the memory, to implement the method according to any one of claims 1 to 5.

12. A computer-readable storage medium, wherein the computer-readable storage medium stores a computer program, and when the computer program is run, the method according to any one of claims 1 to 5 is implemented.

## Patentansprüche

1. Verfahren zum Herstellen einer drahtlosen Verbindung zwischen Vorrichtungen durch Berühren, wobei das Verfahren Folgendes umfasst:
Durchführen (S510), durch eine erste elektronische Vorrichtung (10, 600), eines Wireless-Fidelity-Scans, Wi-Fi-Scans, unter Verwendung eines ersten Scan-Arbeitszyklus, wobei der Wi-Fi-Scan dazu verwendet wird, eine andere elektronische Vorrichtung in der Nähe der ersten elektronischen Vorrichtung (10, 600) zu finden;
wenn die erste elektronische Vorrichtung (10, 600) erkennt, dass sich die erste elektronische Vorrichtung in einem voreingestellten Bewegungszustand befindet, Durchführen (S520), durch die erste elektronische Vorrichtung, eines Wi-Fi-Scans unter Verwendung eines zweiten Scan-Arbeitszyklus, wobei der zweite Scan-Arbeitszyklus größer ist als der erste Scan-Arbeitszyklus; und
wenn eine Signalqualität einer ersten Broadcast-Nachricht, die durch die erste elektronische Vorrichtung mittels Scannen erlangt wird, eine voreingestellte Bedingung erfüllt, Herstellen (S530), durch die erste elektronische Vorrichtung (10, 600), einer Wi-Fi-Verbindung zu einer zweiten elektronischen Vorrichtung (20, 700), wobei die erste Broadcast-Nachricht eine Nachricht ist, die durch die zweite elektronische Vorrichtung (20, 700) gesendet wird,
wobei der voreingestellte Bewegungszustand der Folgende ist: die erste elektronische Vorrichtung (10, 600) bewegt sich auf die zweite elektronische Vorrichtung (20, 700) zu und dann berührt die erste elektronische Vorrichtung (10, 600) die zweite elektronische Vorrichtung (20, 700),
wobei das Berühren durch einen Beschleunigungssensor der ersten elektronischen Vorrichtung (10, 600) erkannt wird, wenn ein Beschleunigungswert in jeder Achsrichtung eine Impulsspitze aufweist oder ein resultierender Beschleunigungswert in allen Achsrichtungen eine Impulsspitze aufweist,
wobei die erste Broadcast-Nachricht eine Gerätekennung und Wi-Fi-Kanalinformationen der zweiten elektronischen Vorrichtung (20, 700) umfasst und
wobei das Herstellen, durch die erste elektronische Vorrichtung (10, 600), einer Wi-Fi-Verbindung zu einer zweiten elektronischen Vorrichtung (20, 700), Folgendes umfasst:
Herstellen, durch die erste elektronische Vorrichtung, der Wi-Fi-Verbindung zu der zweiten elektronischen Vorrichtung (20, 700) basierend auf der ersten Broadcast-Nachricht.

2. Verfahren nach Anspruch 1, wobei, nachdem die Signalqualität der ersten Broadcast-Nachricht, die durch die erste elektronische Vorrichtung (10, 600) empfangen wird, die voreingestellte Bedingung erfüllt, das Verfahren ferner Folgendes umfasst:
Anzeigen, durch die erste elektronische Vorrichtung (10, 600), einer ersten Aufforderungsnachricht, wobei die erste Aufforderungsnachricht dazu verwendet wird, aufzufordern, ob eine Wi-Fi-Verbindung zu der zweiten elektronischen Vorrichtung (20, 700) herzustellen ist; und
das Herstellen, durch die erste elektronische Vorrichtung (10, 600), einer Wi-Fi-Verbindung zu einer zweiten elektronischen Vorrichtung (20, 700), Folgendes umfasst:
als Reaktion auf eine Verbindungsbestätigungsoperation eines Benutzers bei der ersten Aufforderungsnachricht, Herstellen, durch die erste elektronische Vorrichtung (10, 600), der Wi-Fi-Verbindung zu der zweiten elektronischen Vorrichtung (20, 700).

3. Verfahren nach Anspruch 1 oder 2, wobei das Verfahren nach dem Herstellen, durch die erste elektronische Vorrichtung (10, 600), einer Wi-Fi-Verbindung zu einer zweiten elektronischen Vorrichtung, ferner Folgendes umfasst:
Senden, durch die erste elektronische Vorrichtung (10, 600), erster Dienstdaten, die sich auf einen ersten Dienst beziehen, an die zweite elektronische Vorrichtung (20, 700); und/oder
Empfangen, durch die erste elektronische Vorrichtung (10, 600), der ersten Dienstdaten, die durch die zweite elektronische Vorrichtung (20, 700) gesendet werden.

4. Verfahren nach einem der Ansprüche 1 bis 3, wobei das Verfahren ferner Folgendes umfasst:
wenn die erste elektronische Vorrichtung (10, 600) erkennt, dass sich die erste elektronische Vorrichtung (10, 600) in dem voreingestellten Bewegungszustand befindet, Senden, durch die erste elektronische Vorrichtung (10, 600), einer ersten Angabenachricht an die zweite elektronische Vorrichtung (20, 700), wobei die erste Angabenachricht dazu verwendet wird, der zweiten elektronischen Vorrichtung (20, 700) anzugeben, mit Ausstrahlen der ersten Broadcast-Nachricht zu beginnen oder eine Frequenz der Ausstrahlung der ersten Broadcast-Nachricht zu erhöhen.

5. Verfahren nach einem der Ansprüche 1 bis 4, wobei die erste Broadcast-Nachricht ferner eine Gerätekennung einer dritten elektronischen Vorrichtung umfasst und das Verfahren ferner Folgendes umfasst:
Herstellen, durch die erste elektronische Vorrichtung (10, 600), einer Wi-Fi-Verbindung zu der dritten elektronischen Vorrichtung.

6. Elektronische Vorrichtung (10, 600), wobei die elektronische Vorrichtung (10, 600) eine erste elektronische Vorrichtung (10, 600) ist und die elektronische Vorrichtung (10, 600) eine Wi-Fi-Einheit (620), eine Erkennungseinheit (610), eine Verarbeitungseinheit und einen Beschleunigungssensor umfasst, wobei
die Wi-Fi-Einheit (620) dazu konfiguriert ist, einen Wireless-Fidelity-Scan, Wi-Fi-Scan, unter Verwendung eines ersten Scan-Arbeitszyklus durchzuführen, wobei der Wi-Fi-Scan dazu verwendet wird, eine andere elektronische Vorrichtung in der Nähe der ersten elektronischen Vorrichtung (10, 600) zu finden;
die Erkennungseinheit (610) dazu konfiguriert ist, einen Bewegungszustand der ersten elektronischen Vorrichtung (10, 600) relativ zu der anderen elektronischen Vorrichtung zu erkennen;
die Wi-Fi-Einheit (620) ferner zu Folgendem konfiguriert ist:
wenn die Erkennungseinheit (610) erkennt, dass sich die erste elektronische Vorrichtung (10, 600) in einem voreingestellten Bewegungszustand befindet, Durchführen von Scannen unter Verwendung eines zweiten Scan-Arbeitszyklus, wobei der zweite Scan-Arbeitszyklus größer ist als der erste Scan-Arbeitszyklus;
und
die Verarbeitungseinheit zu Folgendem konfiguriert ist: wenn eine Signalqualität einer ersten Broadcast-Nachricht, die durch die erste elektronische Vorrichtung durch das Scannen erlangt wird, eine voreingestellte Bedingung erfüllt, Herstellen einer Wi-Fi-Verbindung zwischen der ersten elektronischen Vorrichtung (10, 600) und einer zweiten elektronischen Vorrichtung (20, 700)) basierend auf der ersten Broadcast-Nachricht, wobei die erste Broadcast-Nachricht eine Nachricht ist, die durch die zweite elektronische Vorrichtung (20, 700) gesendet wird und eine Gerätekennung und Wi-Fi-Kanalinformationen der zweiten elektronischen Vorrichtung (20, 700) umfasst, wobei der voreingestellte Bewegungszustand der Folgende ist: die erste elektronische Vorrichtung (10, 600) bewegt sich auf die zweite elektronische Vorrichtung (20, 700) zu und dann berührt die erste elektronische Vorrichtung (10, 600) die zweite elektronische Vorrichtung (20, 700),
wobei der Beschleunigungssensor dazu angepasst ist, das Berühren zu erkennen, wenn ein Beschleunigungswert in jeder Achsrichtung eine Impulsspitze aufweist oder ein resultierender Beschleunigungswert in allen Achsrichtungen eine Impulsspitze aufweist.

7. Elektronische Vorrichtung (10, 600) nach Anspruch 6, ferner umfassend eine Anzeigeeinheit, wobei
die Anzeigeeinheit zu Folgendem konfiguriert ist: nachdem die Signalqualität der ersten Broadcast-Nachricht, die durch die Wi-Fi-Einheit durch das Scannen erlangt wurde, die voreingestellte Bedingung erfüllt, Anzeigen einer ersten Aufforderungsnachricht, wobei die erste Aufforderungsnachricht dazu verwendet wird, aufzufordern, ob eine Wi-Fi-Verbindung zu der zweiten elektronischen Vorrichtung (20, 700) herzustellen ist; und
die Verarbeitungseinheit insbesondere zu Folgendem konfiguriert ist: als Reaktion auf eine Verbindungsbestätigungsoperation eines Benutzers bei der ersten Aufforderungsnachricht, Herstellen der Wi-Fi-Verbindung zu der zweiten elektronischen Vorrichtung (20, 700).

8. Elektronische Vorrichtung nach Anspruch 6 oder 7, wobei die Wi-Fi-Einheit ferner zu Folgendem konfiguriert ist: nachdem die erste elektronische Vorrichtung (10, 600) die Wi-Fi-Verbindung zu der zweiten elektronischen Vorrichtung (20, 700) hergestellt hat, Senden erster Dienstdaten, die sich auf einen ersten Dienst beziehen, an die zweite elektronische Vorrichtung (20, 700); und/oder Empfangen der ersten Dienstdaten, die durch die zweite elektronische Vorrichtung (20, 700) gesendet werden.

9. Elektronische Vorrichtung (10, 600) nach Anspruch 8, wobei die Wi-Fi-Einheit (620) ferner zu Folgendem konfiguriert ist: wenn die Erkennungseinheit (610) erkennt, dass sich die erste elektronische Vorrichtung (10, 600) in dem voreingestellten Bewegungszustand befindet, Senden einer ersten Angabenachricht an die zweite elektronische Vorrichtung (20, 700), wobei die erste Angabenachricht dazu verwendet wird, der zweiten elektronischen Vorrichtung (20, 700) anzugeben, mit Ausstrahlen der ersten Broadcast-Nachricht zu beginnen oder eine Frequenz der Ausstrahlung der ersten Broadcast-Nachricht zu erhöhen.

10. Elektronische Vorrichtung (10, 600) nach einem der Ansprüche 6 bis 9, wobei die erste Broadcast-Nachricht ferner eine Gerätekennung einer dritten elektronischen Vorrichtung umfasst; und
die Verarbeitungseinheit ferner dazu konfiguriert ist, eine Wi-Fi-Verbindung zwischen der ersten elektronischen Vorrichtung (10, 600) und der dritten elektronischen Vorrichtung herzustellen.

11. Chip, wobei der Chip einen Prozessor umfasst, der Prozessor mit einem Speicher verbunden ist und der Prozessor dazu konfiguriert ist, ein Computerprogramm, das in dem Speicher gespeichert ist, zu lesen und auszuführen, um das Verfahren nach einem der Ansprüche 1 bis 5 zu implementieren.

12. Computerlesbares Speichermedium, wobei das computerlesbare Speichermedium ein Computerprogramm speichert und, wenn das Computerprogramm läuft, das Verfahren nach einem der Ansprüche 1 bis 5 implementiert wird.

## Revendications

1. Procédé permettant d'établir une connexion sans fil entre des dispositifs via un contact, dans lequel le procédé comprend :
la réalisation (S510), par un premier dispositif électronique (10, 600), d'un balayage de fidélité sans fil, Wi-Fi, à l'aide d'un premier cycle de service de balayage, dans lequel le balayage Wi-Fi est utilisé pour découvrir un autre dispositif électronique autour du premier dispositif électronique (10, 600) ;
lorsque le premier dispositif électronique (10, 600) détecte que le premier dispositif électronique est dans un état de mouvement prédéfini, la réalisation (S520), par le premier dispositif électronique, d'un balayage Wi-Fi à l'aide d'un second cycle de service de balayage, dans lequel le second cycle de service de balayage est supérieur au premier cycle de service de balayage ;
et
lorsqu'une qualité du signal d'un premier message de diffusion obtenu par le premier dispositif électronique par balayage répond à une condition prédéfinie, l'établissement (S530), par le premier dispositif électronique (10, 600), d'une connexion Wi-Fi avec un deuxième dispositif électronique (20, 700), dans lequel le premier message de diffusion est un message envoyé par le deuxième dispositif électronique (20, 700),
dans lequel l'état de mouvement prédéfini est le suivant : le premier dispositif électronique (10, 600) se déplace vers le deuxième dispositif électronique (20, 700), puis le premier dispositif électronique (10, 600) entre en contact avec le deuxième dispositif électronique (20, 700),
dans lequel le contact est détecté par un capteur d'accélération du premier dispositif électronique (10, 600) lorsqu'une valeur d'accélération dans chaque direction d'axe présente un pic d'impulsion, ou qu'une valeur d'accélération résultante dans toutes les directions d'axe présente un pic d'impulsion,
dans lequel le premier message de diffusion comprend un identifiant de dispositif et des informations sur le canal Wi-Fi du deuxième dispositif électronique (20, 700), et
dans lequel l'établissement, par le premier dispositif électronique (10, 600), d'une connexion Wi-Fi avec un deuxième dispositif électronique (20, 700) comprend :
l'établissement, par le premier dispositif électronique, de la connexion Wi-Fi avec le deuxième dispositif électronique (20, 700) sur la base du premier message de diffusion.

2. Procédé selon la revendication 1, dans lequel, après que la qualité du signal du premier message de diffusion reçu par le premier dispositif électronique (10, 600) répond à la condition prédéfinie, le procédé comprend également :
l'affichage, par le premier dispositif électronique (10, 600), d'un premier message d'invite, dans lequel le premier message d'invite est utilisé pour demander s'il faut établir une connexion Wi-Fi avec le deuxième dispositif électronique (20, 700) ; et
l'établissement, par le premier dispositif électronique (10, 600), d'une connexion Wi-Fi avec un deuxième dispositif électronique (20, 700) comprend :
en réponse à une opération de confirmation de connexion d'un utilisateur sur le premier message d'invite, l'établissement, par le premier dispositif électronique (10, 600), de la connexion Wi-Fi avec le deuxième dispositif électronique (20, 700).

3. Procédé selon la revendication 1 ou 2, dans lequel, après l'établissement, par le premier dispositif électronique (10, 600), d'une connexion Wi-Fi avec un deuxième dispositif électronique, le procédé comprend également :
l'envoi, par le premier dispositif électronique (10, 600), de premières données de service relatives à un premier service au deuxième dispositif électronique (20, 700) ; et/ou
la réception, par le premier dispositif électronique (10, 600), des premières données de service envoyées par le deuxième dispositif électronique (20, 700).

4. Procédé selon l'une quelconque des revendications 1 à 3, dans lequel le procédé comprend également :
lorsque le premier dispositif électronique (10, 600) détecte que le premier dispositif électronique (10, 600) est dans l'état de mouvement prédéfini, l'envoi, par le premier dispositif électronique (10, 600), d'un premier message d'indication au deuxième dispositif électronique (20, 700), dans lequel le premier message d'indication est utilisé pour indiquer au deuxième dispositif électronique (20, 700) de commencer à diffuser le premier message de diffusion ou d'augmenter une fréquence de diffusion du premier message de diffusion.

5. Procédé selon l'une quelconque des revendications 1 à 4, dans lequel le premier message de diffusion comprend également un identifiant de dispositif d'un troisième dispositif électronique, et le procédé comprend également :
l'établissement, par le premier dispositif électronique (10, 600), d'une connexion Wi-Fi avec le troisième dispositif électronique.

6. Dispositif électronique (10, 600), dans lequel le dispositif électronique (10, 600) est un premier dispositif électronique (10, 600), et le dispositif électronique (10, 600) comprend une unité Wi-Fi (620), une unité de détection (610), une unité de traitement et un capteur d'accélération, dans lequel
l'unité Wi-Fi (620) est configurée pour réaliser un balayage de fidélité sans fil, Wi-Fi, à l'aide d'un premier cycle de service de balayage, dans lequel le balayage Wi-Fi est utilisé pour découvrir un autre dispositif électronique autour du premier dispositif électronique (10, 600) ;
l'unité de détection (610) est configurée pour détecter un état de mouvement du premier dispositif électronique (10, 600) par rapport à l'autre dispositif électronique ;
l'unité Wi-Fi (620) est également configurée pour : lorsque l'unité de détection (610) détecte que le premier dispositif électronique (10, 600) est dans un état de mouvement prédéfini, réaliser un balayage à l'aide d'un second cycle de service de balayage, dans lequel le second cycle de service de balayage est supérieur au premier cycle de service de balayage ; et
l'unité de traitement est configurée pour : lorsque la qualité du signal d'un premier message de diffusion obtenu par le premier dispositif électronique par balayage répond à une condition prédéfinie, établir une connexion Wi-Fi entre le premier dispositif électronique (10, 600) et un deuxième dispositif électronique (20, 700) sur la base du premier message de diffusion, dans lequel le premier message de diffusion est un message envoyé par le deuxième dispositif électronique (20, 700) et comprend un identifiant de dispositif et des informations sur le canal Wi-Fi du deuxième dispositif électronique (20, 700), dans lequel l'état de mouvement prédéfini est le suivant : le premier dispositif électronique (10, 600) se déplace vers le deuxième dispositif électronique (20, 700), puis le premier dispositif électronique (10, 600) entre en contact avec le deuxième dispositif électronique (20, 700),
dans lequel le capteur d'accélération est adapté pour détecter le contact lorsqu'une valeur d'accélération dans chaque direction d'axe présente un pic d'impulsion, ou lorsqu'une valeur d'accélération résultante dans toutes les directions d'axe présente un pic d'impulsion.

7. Dispositif électronique (10, 600) selon la revendication 6, comprenant également une unité d'affichage, dans lequel
l'unité d'affichage est configurée pour : une fois que la qualité du signal du premier message de diffusion obtenu par l'unité Wi-Fi par balayage répond à la condition prédéfinie, afficher un premier message d'invite, dans lequel le premier message d'invite est utilisé pour demander s'il faut établir une connexion Wi-Fi avec le deuxième dispositif électronique (20, 700) ; et
l'unité de traitement est spécifiquement configurée pour : en réponse à une opération de confirmation de connexion d'un utilisateur sur le premier message d'invite, établir la connexion Wi-Fi avec le deuxième dispositif électronique (20, 700).

8. Dispositif électronique selon la revendication 6 ou 7, dans lequel l'unité Wi-Fi est également configurée pour : après que le premier dispositif électronique (10, 600) a établi la connexion Wi-Fi avec le deuxième dispositif électronique (20, 700), envoyer des premières données de service liées à un premier service au deuxième dispositif électronique (20, 700) ; et/ou recevoir les premières données de service envoyées par le deuxième dispositif électronique (20, 700).

9. Dispositif électronique (10, 600) selon la revendication 8, dans lequel l'unité Wi-Fi (620) est également configurée pour : lorsque l'unité de détection (610) détecte que le premier dispositif électronique (10, 600) est dans l'état de mouvement prédéfini, envoyer un premier message d'indication au deuxième dispositif électronique (20, 700), dans lequel le premier message d'indication est utilisé pour indiquer au deuxième dispositif électronique (20, 700) de commencer à diffuser le premier message de diffusion ou d'augmenter une fréquence de diffusion du premier message de diffusion.

10. Dispositif électronique (10, 600) selon l'une quelconque des revendications 6 à 9, dans lequel le premier message de diffusion comprend également un identifiant de dispositif d'un troisième dispositif électronique ; et
l'unité de traitement est également configurée pour établir une connexion Wi-Fi entre le premier dispositif électronique (10, 600) et le troisième dispositif électronique.

11. Puce, dans laquelle la puce comprend un processeur, le processeur est couplé à une mémoire, et le processeur est configuré pour lire et exécuter un programme informatique stocké dans la mémoire, pour mettre en œuvre le procédé selon l'une quelconque des revendications 1 à 5.

12. Support de stockage lisible par ordinateur, dans lequel le support de stockage lisible par ordinateur stocke un programme informatique, et lorsque le programme informatique est exécuté, le procédé selon l'une quelconque des revendications 1 à 5 est mis en œuvre.
